# FASCICULE DE BREVET EUROPEEN

(11) **EP 3 295 550 B1**
(45) Date de publication et mention de la délivrance du brevet: **16.12.2020**
(21) Numéro de dépôt: 16716593.5
(22) Date de dépôt: 15.04.2016
(51) Int. Cl.: H02M 7/483

(54) **DISPOSITIF DE CONVERSION DE PUISSANCE MOYENNE TENSION MULTINIVEAUX A SORTIE ALTERNATIVE**
AUSGANGSUMWANDLUNGSVORRICHTUNG VON MITTLERER MEHRPEGEL-SPANNUNGSLEISTUNG
AC OUTPUT MULTILEVEL MIDDLE POWER CONVERTER DEVICE

(30) Priorité: 11.05.2015 FR 1554177
(43) Date de publication de la demande: 21.03.2018
(73) Titulaire: Schneider Toshiba Inverter Europe SAS, 27120 Pacy sur Eure (FR)
(72) Inventeur: LAVIEVILLE, Jean-Paul, 78470 Saint Lambert des Bois (FR); WU, Cong, Martin, 65000 Tarbes (FR)
(74) Mandataire: Mouney, Jérôme
(86) Numéro de dépôt international: PCT/EP2016/058391
(87) Numéro de publication internationale: WO 2016/180599

(56) Documents cités:
- EP-A1- 2 408 081
- EP-A1- 2 963 801
- WO-A1-2014/133026
- MAKOTO HAGIWARA ET AL: "Startup and low-speed operation of an adjustable-speed motor driven by a modular multilevel cascade inverter (MMCI)", ENERGY CONVERSION CONGRESS AND EXPOSITION (ECCE), 2012 IEEE, IEEE, 15 septembre 2012 (2012-09-15), pages 718-725, XP032467556, DOI: 10.1109/ECCE.2012.6342749 ISBN: 978-1-4673-0802-1

## Description

### DOMAINE TECHNIQUE

La présente invention concerne le domaine des dispositifs de conversion de puissance multiniveaux à sortie alternative destinés à fonctionner en moyenne tension. De tels convertisseurs peuvent être utilisés dans des applications de variateur de vitesse de forte puissance pour des moteurs à courant alternatif. L'un des marchés majeurs des variateurs de vitesse en moyenne tension est le remplacement de machines électriques tournantes fonctionnant à vitesse fixe, soit 97% de parts de marché, par un système à vitesse variable, en intégrant un variateur de vitesse qui pilotera la même machine tournante.

### ÉTAT DE LA TECHNIQUE ANTÉRIEURE

Les convertisseurs de puissance multiniveaux DC/AC sont basés sur la mise en série de modules de commutation formés avec des commutateurs électroniques pour permettre une montée en tension élevée en sortie, ces commutateurs électroniques étant des composants basse tension qui ont une tenue en tension limitée.

On connait des convertisseurs de puissance de type NPC (pour Neutral Point Clamped ou clampage par le neutre) comportant une série de plusieurs modules avec deux paires de commutateurs électroniques en série, deux diodes en série connectées d'un côté au nœud commun entre les deux commutateurs électroniques de la première paire et de l'autre au nœud commun entre les deux commutateurs électroniques de la seconde paire. On trouve de plus, une série de deux condensateurs connectée aux bornes de l'ensemble formé par les paires de commutateurs électroniques. Le nœud commun entre les deux diodes en série est relié au nœud commun entre les deux condensateurs de la série.

Ce type de module conduit à une forme d'onde satisfaisante et à une réduction des contraintes de tension sur les commutateurs électroniques. Par contre, il peut se produire des déséquilibres de la tension aux bornes des condensateurs.

Des améliorations de la topologie originale NPC sont intervenues, en remplaçant les deux diodes par une paire de commutateurs électroniques. Cette topologie est dénommée ANPC à 3 niveaux de tension.

Pour augmenter encore le niveau de tension acceptable, il a été proposé de mettre plus de commutateurs électroniques en série et d'ajouter des condensateurs, ce qui conduit à la topologie dénommée ANPC à 5 niveaux de tension. Les cellules de type ANPC 5 niveaux de tension sont actuellement limitées à des niveaux de tension de l'ordre de 6,9 kV, ce qui n'est pas forcément suffisant.

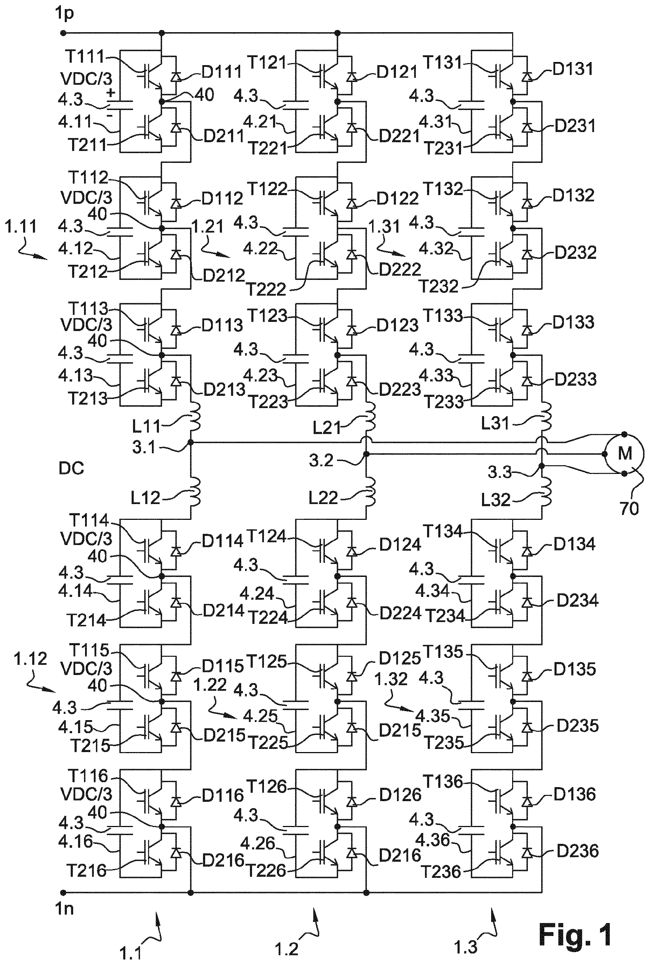

On connait également, comme illustré sur la figure 1, un convertisseur multiniveaux modulaire DC/AC (connu sous la dénomination MMC pour Modular Multilevel Converter) comportant plusieurs bras 1.1, 1.2, 1.3 dont les extrémités définissent des bornes extrêmes continues 1p, 1n à monter en parallèle aux bornes d'une alimentation continue DC, chaque bras 1.1, 1.2, 1.3 est formé de deux demi-bras 1.11, 1.12, 1.21, 1.22, 1.31, 1.32 montés en série et reliés à une borne commune 3.1, 3.2, 3.3. Ces bornes communes 3.1, 3.2, 3.3 définissent des bornes alternatives à relier à une charge alternative 70. Cette charge 70 est représentée comme un moteur. Dans l'exemple, le convertisseur DC/AC est triphasé, chacun des bras 1.1, 1.2, 1.3 correspondant à une phase, la phase 1 pour le bras 1.1, la phase 2 pour le bras 1.2 et la phase 3 pour le bras 1.3. Un convertisseur monophasé aurait seulement deux bras.

Chaque demi-bras 1.11, 1.12, 1.21, 1.22, 1.31, 1.32 comporte une chaîne de modules de commutation montés en série. Elle est reliée à une des bornes communes 3.1, 3.2, 3.3 via une inductance L11, L12, L21, L22, L31, L32 pour respecter les règles de connexion en source de courant et source de tension. Il est préférable que les deux inductances d'un même bras aient une même valeur pour simplifier le fonctionnement du montage. Les deux inductances pourraient être couplées. Dans la suite de la description, on appellera première chaîne de modules, celle reliée à la borne continue 1p positive, et deuxième chaîne de modules, celle reliée à la borne continue 1n négative. Il y a le même nombre de modules de commutation dans chaque demi-bras.

Les modules de commutation du bras 1.1 sont référencés successivement 4.11 à 4.16 depuis la borne 1p jusqu'à la borne 1n. Les modules de commutation du bras 1.2 sont référencés successivement 4.21 à 4.26 depuis la borne 1p jusqu'à la borne 1n. Les modules de commutation du bras 1.3 sont référencés successivement 4.31 à 4.36 depuis la borne 1p jusqu'à la borne 1n.

Chaque module de commutation comporte au moins une paire de commutateurs électroniques agencés en série ayant un nœud commun 40, la paire étant connectée en parallèle avec un dispositif de stockage d'énergie 4.3 formant un agencement en demi-pont, le dispositif de stockage d'énergie 4.3 ayant une capacité flottante.

Les commutateurs électroniques du module 4.11 sont référencés T111, T211. Les commutateurs électroniques du module 4.12 sont référencés T112, T212. Les numérotations se poursuivent de la même manière et ainsi les commutateurs électroniques du module 4.16 sont référencés T116, T216.

Dans le bras 1.2, les commutateurs électroniques du module 4.21 sont référencés T121, T221. Les commutateurs électroniques du module 4.22 sont référencés T122, T222. Les commutateurs électroniques du module 4.26 sont référencés T126, T226.

Dans le bras 1.3, commutateurs électroniques du module 4.31 sont référencés T131, T231. Les commutateurs électroniques du module 4.32 sont référencés T132, T232. Les commutateurs électroniques du module 4.36 sont référencés T136, T236.

Dans chaque module, le dispositif de stockage d'énergie 4.3 a une borne de polarité positive (+) par laquelle rentre un courant de charge (courant positif) destiné à le charger. Le dispositif de stockage d'énergie 4.3 a une borne de polarité négative (-) par laquelle rentre un courant de décharge (courant négatif) destiné à le décharger. L'un des commutateurs électroniques est relié à la borne positive (+) du dispositif de stockage d'énergie 4.3, il s'agit de celui du haut dénommé T111 pour le module de commutation 4.11. L'autre commutateur électronique est relié à la borne négative (-) du dispositif de stockage d'énergie 4.3, il s'agit de celui du bas dénommé T211 pour le module de commutation 4.11.

La diode montée en antiparallèle avec le commutateur électronique de puissance T111 est référencée D111. La diode montée en antiparallèle avec le commutateur électronique de puissance T211 est référencée D211.

Les numérotations des commutateurs électroniques de puissance et des diodes des autres modules suivent le même principe. Ils ne sont pas forcément nommés dans cette description mais sont référencés sur certaines figures. Dans la suite de la description, les commutateurs électroniques T111, T112, T113, T114, T115, T116, reliés à la borne positive (+) d'un dispositif de stockage d'énergie 4.3 sont appelés premiers commutateurs électroniques et les commutateurs électroniques T211, T212, T213, T214, T215, T216 reliés à la borne négative (-) d'un dispositif de stockage d'énergie 4.3 sont appelés seconds commutateurs électroniques. Cette qualification s'applique également aux diodes.

Dans une même chaîne de commutation, tous les commutateurs électroniques de puissance reliés à une borne de même polarité des dispositifs de stockage d'énergie sont qualifiés d'homologues.

On affecte aux modules d'un demi-bras un rang compté de manière croissante à partir de l'extrémité la plus positive du demi-bras. Les modules de deux demi-bras d'un même bras qui ont le même rang sont qualifiés d'homologues.

Les commutateurs électroniques de puissance T111, T211, etc.... peuvent être choisis, par exemple, parmi des transistors bipolaires à grille isolée IGBT, des transistors à effet de champ FET, des transistors MOS MOSFET, des thyristors à extinction par la gâchette GTO, des thyristors commutés par la gâchette intégrés IGCT, etc.

Le dispositif de stockage d'énergie 4.3 peut être choisi, par exemple, parmi un condensateur, une batterie, une pile à combustible etc.

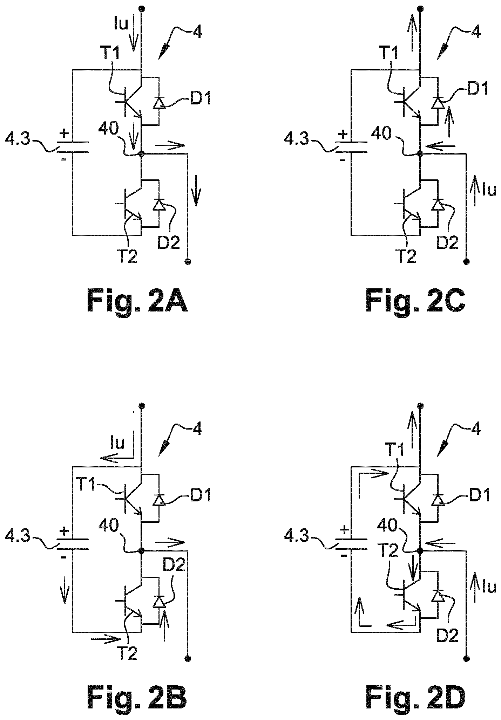

Sur les figures 2A à 2D, on a représenté un module de commutation de même type que ceux illustrés sur la figure 1.

Son premier commutateur électronique de puissance est appelé T1 et la diode associée D1. Son second commutateur électronique de puissance est appelé T2 et la diode associée D2. Sur ces figures, les trajets de circulation d'un courant Iu interne à un tel module de commutation, en fonction de l'état bloqué ou passant de ses commutateurs électroniques de puissance T1, T2, sont visibles. Le courant Iu est alternativement positif (figures 2A, 2B) et négatif (figures 2C, 2D). Les deux commutateurs électroniques de puissance T1, T2 d'un même module sont dans des états opposés (passant ou bloqué) à une valeur de temps mort près. Il ne faut pas que les deux commutateurs électroniques de puissance T1, T2 d'un module de commutation soient passants en même temps, sinon on met en court-circuit le dispositif de stockage d'énergie 4.3.

Sur la figure 2A, le premier commutateur électronique de puissance T1 est passant et le second commutateur électronique de puissance T2 est bloqué. Le courant Iu est positif, il entre dans le module de commutation 4 par le premier commutateur électronique de puissance T1 et en ressort par le nœud commun 40 entre les deux commutateurs électroniques de puissance T1, T2. Il ne passe pas par le dispositif de stockage d'énergie 4.3.

Sur la figure 2B, le second commutateur électronique de puissance T2 est passant et le premier commutateur électronique de puissance T1 est bloqué. Le courant Iu est positif, il entre dans le module de commutation 4 par le dispositif de stockage d'énergie 4.3, il passe par la seconde diode D2 et ressort par le nœud commun 40 entre les deux commutateurs électroniques de puissance T1, T2. Le courant Iu charge le dispositif de stockage d'énergie 4.3.

Sur la figure 2C, le premier commutateur électronique de puissance T1 est passant et le second commutateur électronique de puissance T2 est bloqué. Le courant Iu est négatif, il entre dans le module de commutation 4 par le nœud commun 40 entre les deux commutateurs électroniques de puissance T1, T2, il traverse la première diode D1 et ressort du module de commutation par la cathode de la première diode D1. Il ne passe pas par le dispositif de stockage d'énergie 4.3.

Sur la figure 2D, le second commutateur électronique de puissance T2 est passant et le premier commutateur électronique de puissance T1 est bloqué. Le courant Iu est négatif, il entre dans le module de commutation par le nœud commun 40 entre les deux commutateurs électroniques de puissance T1, T2, il traverse le second commutateur électronique de puissance T2, le dispositif de stockage d'énergie 4.3 et ressort du module de commutation sans passer ni par le premier commutateur électronique de puissance T1, ni par la première diode D1. Le dispositif de stockage d'énergie 4.3 se décharge.

Dans les convertisseurs DC/AC multiniveaux modulaires conventionnels comme celui de la figure 1, les chaînes de modules de commutation ont pour fonction à la fois d'adapter l'amplitude du signal formé à partir de l'alimentation électrique continue DC et présent au niveau de chaque borne commune 3.1, 3.2, 3.3 et de réguler la fréquence de ce signal. Les commutateurs électroniques de puissance sont commandés par Modulation de Largeur d'Impulsion MLI (en anglais Pulse Width Modulation soit PWM).

Avec une telle commande des commutateurs électroniques de puissance T1, T2, on passe alternativement, lorsque le courant Iu est positif, de la situation où le premier commutateur électronique de puissance T1 est passant (figure 2A) à la situation où la seconde diode D2 conduit (figure 2B). Chaque fois que la seconde diode D2 conduit, la tension aux bornes du dispositif de stockage d'énergie 4.3 augmente. Lorsque le courant Iu est négatif, on passe alternativement de la situation où le second commutateur électronique de puissance T2 est passant (figure 2D) à la situation où la première diode D1 conduit (figure 2C). Chaque fois que le second commutateur électronique de puissance T2 est passant, la tension aux bornes du dispositif de stockage d'énergie 4.3 décroit.

En se référant de nouveau à la figure 1, et en s'intéressant à un des bras, par exemple au bras 1.1, il y a un lien entre la commande des modules de ses deux demi-bras.

On suppose que le montage est bien équilibré et que la tension délivrée par l'alimentation électrique continue DC vaut VDC, chaque dispositif de stockage d'énergie 4.3 est chargé à VDC/3 puisque dans l'exemple représenté, la chaîne de modules de commutation comporte trois modules de commutation dans chaque demi-bras. Avec n modules la tension serait de VDC/n. Il n'est pas possible que, dans un même bras, tous les commutateurs électroniques de puissance reliés à une même borne soit positive, soit négative, des dispositifs de stockage d'énergie soient passants en même temps, pour respecter l'équation des tensions. En effet à chaque instant, la somme de la tension aux bornes d'un demi-bras et de la tension aux bornes de l'autre demi-bras est égale à la tension délivrée par l'alimentation électrique continue DC.

Dans un demi-bras, avec cette commande MLI, les modules de commutation sont activés successivement, ce qui signifie que, les commutateurs électroniques de puissance reliés à une même borne soit positive, soit négative, des dispositifs de stockage d'énergie sont rendus passants ou bloqués successivement. La tension alternative créée, prélevée au niveau d'une des bornes communes 3.1, 3.2 ou 3.3, comporte un nombre de niveaux égal au nombre de modules dans demi-bras plus un.

Un convertisseur multiniveaux modulaire utilisant dans chaque bras deux chaînes de modules de commutation montés en série comme ceux des figures 2 a été décrit pour la première fois dans la demande de brevet DE 10 10 031 de Rainer Marquardt.

La demande de brevet EP 2 408 081 décrit également un convertisseur multiniveaux utilisant des chaînes de modules de commutation montés en série.

Les documents WO2014/133026A1 et EP2963801A1 décrivent également des dispositifs de conversion de puissance multiniveaux modulaires. Il en est de même dans l'article intitulé *"*Start-up and low speed operation of an adjustable-speed motor driven by a modular multilevel cascade inverter" - Makoto et al. - ECCE, 2012 - IEEE - 15/09/2012, pages 718-725.

Si ces convertisseurs DC/AC multiniveaux modulaires sont destinés à fournir des signaux de sortie, côté alternatif, à très basse fréquence, par exemple inférieure à la dizaine de Hertz, permettant notamment de régler la vitesse de moteurs à courant alternatif, comme il existe des dispositifs de stockage d'énergie à capacité flottante au sein de chaque module de commutation, le courant circulant dans ces dispositifs de stockage d'énergie change de sens si lentement qu'ils continuent à se charger jusqu'à atteindre leur tension de claquage et risquent d'être détériorés. Si on est alors amené à sur dimensionner ces dispositifs de stockage d'énergie, le coût du convertisseur multiniveaux modulaire devient prohibitif, car ces dispositifs de stockage d'énergie coûtent en général très chers.

Par ailleurs, la taille et le coût des dispositifs de stockage d'énergie inclus dans ces convertisseurs multiniveaux modulaires sont inversement proportionnels à la fréquence du signal de sortie. Plus la fréquence est basse, plus les convertisseurs sont volumineux et chers. Cela limite l'emploi des convertisseurs multiniveaux modulaires avec beaucoup de modules de commutation pour l'alimentation de moteurs à courant alternatif à vitesse variable.

### EXPOSÉ DE L'INVENTION

La présente invention est définie par les caractéristiques de la revendication 1.

La présente invention a justement comme but de proposer un dispositif de conversion de puissance multiniveaux modulaire à sortie alternative qui peut fournir des signaux à basse fréquence sans pour autant être volumineux et cher.

Un autre but de l'invention est de fournir un dispositif de conversion de puissance multiniveaux modulaire qui utilise des composants de puissance à basse tension pour des applications en moyenne tension, ces derniers permettant d'obtenir un rendement meilleur qu'avec des composants en moyenne tension.

Un autre but de l'invention est de fournir un dispositif de conversion de puissance multiniveaux modulaire qui n'a pas besoin d'avoir des dispositifs de stockage d'énergie à capacité flottante surdimensionnés.

Encore un autre but de l'invention est de fournir un variateur de vitesse qui utilise un dispositif de conversion de puissance multiniveaux modulaire ainsi caractérisé et qui peut fonctionner à couple constant et faible vitesse notamment pour des applications de ventilation, pompage, traction.

Un but supplémentaire de l'invention est de proposer un variateur de vitesse ayant des besoins en composants passifs réduits tels un transformateur de puissance volumineux et onéreux ou des filtres LC de lissage.

Pour y parvenir la présente invention est un dispositif de conversion de puissance multiniveaux modulaire à sortie alternative et entrée alternative ou continue comportant :
un convertisseur DC/AC multiniveaux modulaire, à plusieurs bras montés en parallèle, dont les extrémités définissent des bornes continues d'entrée, chaque bras comportant deux chaînes de modules de commutation en série, reliées à une borne commune, cette borne commune définissant une borne alternative de sortie du dispositif de conversion de puissance multiniveaux modulaire, chaque module de commutation comportant au moins une paire de commutateurs électroniques de puissance agencés en série, montée aux bornes d'un dispositif de stockage d'énergie, les commutateurs électroniques de puissance d'une même chaîne, reliés à une borne de même polarité du dispositif de stockage d'énergie étant qualifiés d'homologues, le convertisseur DC/AC multiniveaux modulaire étant destiné à ajuster la fréquence en sortie du dispositif de conversion multiniveaux modulaire et comportant, en outre, des moyens de commande des commutateurs électroniques de puissance pour les mettre dans un état passant ou bloqué, caractérisé en ce que :
les moyens de commande sont adaptés pour leur appliquer, pendant au moins une partie d'un intervalle de temps de fonctionnement du dispositif de conversion de puissance, une commande pleine onde, les modules d'une même chaîne ayant alors leurs commutateurs électroniques de puissance homologues dans un même état simultanément et en ce qu'il comporte en outre :
un convertisseur à sortie continue et entrée continue ou alternative comportant deux bornes de sortie reliées aux bornes continues d'entrée du convertisseur multiniveaux modulaire, ce convertisseur à sortie continue étant destiné à ajuster l'amplitude en sortie du dispositif de conversion de puissance.

Chaque module comporte un premier commutateur de puissance relié à une borne de polarité positive du dispositif de stockage d'énergie et un second commutateur de puissance relié à une borne de polarité négative du dispositif de stockage d'énergie et pendant la commande pleine onde, un courant ne circule que dans les modules de commutation dont le premier commutateur de puissance est à l'état passant.

Les moyens de commande appliquent, pendant au moins une seconde partie restante de l'intervalle de temps, aux commutateurs électroniques de puissance, une commande MLI, la commande MLI étant appliquée lorsqu'un courant de sortie du dispositif de conversion de puissance multiniveaux modulaire est inférieur à un seuil, la commande pleine onde étant appliquée lorsque le courant de sortie est supérieur ou égal au seuil.

Pendant la commande MLI, les moyens de commande commandent les commutateurs électroniques de puissance de modules d'une même chaîne de modules, successivement.

Dans un module, chaque commutateur électronique de puissance est associé avec une diode en antiparallèle de manière à former un élément de commutation bidirectionnel en courant.

La connexion des chaînes de modules d'un même bras à la borne commune se fait via des inductances.

Chaque commutateur électronique de puissance peut être choisi parmi un transistor bipolaire à grille isolée, un transistor à effet de champ, un transistor MOSFET, un thyristor à extinction par la gâchette, un thyristor commuté par la gâchette intégré.

Le dispositif de stockage d'énergie peut être choisi parmi un condensateur, une batterie, une pile à combustible.

Il est possible que le convertisseur à sortie continue et entrée continue soit un convertisseur DC/DC multiniveaux modulaire possédant un unique bras dont les extrémités définissent deux bornes d'entrée continues, comportant deux demi-bras en série ayant une borne commune, cette borne commune définissant une des bornes continue de sortie, une des extrémités du bras définissant l'autre borne de sortie, chaque demi-bras comportant une chaîne de modules de commutation avec au moins une paire de commutateurs électroniques de puissance montés en série, cette paire étant montée aux bornes d'un dispositif de stockage d'énergie, et des moyens de commande des commutateurs électroniques de puissance de chaque module.

Les moyens de commande des commutateurs électroniques de puissance de chaque module du convertisseur DC/DC multiniveaux modulaire peuvent appliquer aux commutateurs électroniques de puissance une commande pleine onde, la commande pleine onde ayant une fréquence plus grande que la fréquence de la commande pleine onde des moyens de commande des commutateurs électroniques de puissance de chaque module du convertisseur DC/AC multiniveaux modulaire .

Le convertisseur à sortie continue et entrée alternative peut être un pont redresseur à commutation commandée.

En variante, le convertisseur à sortie continue et entrée alternative peut être un convertisseur AC/DC multiniveaux modulaire.

La présente invention concerne également un variateur de vitesse comportant un dispositif de conversion de puissance multiniveaux modulaire ainsi caractérisé.

Lorsque le dispositif de conversion de puissance multiniveaux modulaire comporte un convertisseur à sortie continue et entrée alternative, l'entrée alternative est destinée à être reliée à une alimentation électrique alternative.

Lorsque le dispositif de conversion de puissance multiniveaux modulaire comporte un convertisseur à entrée continue et sortie continue, le variateur de vitesse peut comporter, en outre, un convertisseur à entrée alternative et sortie continue, destiné à être relié côté entrée alternative à une alimentation électrique alternative et relié côté sortie continue au convertisseur à entrée continue et sortie continue.

Un transformateur destiné à être relié d'un côté à l'alimentation électrique alternative et relié de l'autre à l'entrée alternative du convertisseur à entrée alternative et sortie continue du dispositif de conversion de puissance multiniveaux modulaire peut être prévu dans le variateur de vitesse.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
La figure 1, déjà décrite, illustre un convertisseur multiniveaux modulaire DC/AC conventionnel ;
Les figures 2A, 2B, 2C, 2D, déjà décrites, illustrent les différents trajets du courant dans un module de commutation en fonction de l'état de ses commutateurs électroniques de puissance ;
La figure 3 illustre un exemple de dispositif de conversion de puissance multiniveaux modulaire à entrée continue et sortie alternative objet de l'invention ;
La figure 4A illustre des signaux de consigne sinusoïdaux qui vont servir pour déterminer les instants de commutation des premier et second commutateurs de puissance d'un module de commutation du premier bras, second et troisième bras du convertisseur DC/AC multiniveaux modulaire de la figure 3, dans le cas d'une commande pleine onde ;
Les figures 4B, 4C, 4D sont des chronogrammes illustrant, à partir des signaux de consigne de la figure 4A, l'état des commutateurs électroniques de puissance d'un module de commutation localisé dans chacun des bras du convertisseur DC/AC multiniveaux modulaire de la figure 3 ;
La figure 4E illustre l'évolution, en fonction du temps, des tensions simples Va, Vb, Vc, et la figure 4F illustre l'évolution, en fonction du temps, des tensions composées prélevées entre deux bornes communes ;
Les figures 5A1, 5A2, illustrent en fonction du temps, le signal de référence et la porteuse en dents de scie utilisés pour déterminer les moments de commande pleine onde et de commande MLI appliquées aux commutateurs électroniques de puissance, sur la figure 5A1 le signal de référence est une sinusoïde complète et sur la figure 5A2 le signal de référence est une sinusoïde tronquée au niveau des crêtes; la figure 5B illustre l'évolution, en fonction du temps, des tensions simples Va, Vb, Vc;
La figure 6A illustre l'évolution, dans le temps, de la tension continue délivrée par l'alimentation électrique continue illustrée à la figure 3 et la figure 6B illustre, l'évolution dans le temps, de la tension continue formée par le convertisseur DC/DC multiniveaux modulaire illustré sur la figure 3 ;
Les figures 7A, 7B, 7C, 7D illustrent des trajets de courants circulant dans le convertisseur DC/AC multiniveaux modulaire de la figure 3 et dans une charge alimentée par ce convertisseur lors d'une commande pleine onde ;
La figure 8 illustre un variateur de vitesse qui comporte un dispositif de conversion de puissance multiniveaux modulaire à entrée continue et sortie alternative objet de l'invention ;
La figure 9A illustre un autre exemple de dispositif de conversion de puissance multiniveaux modulaire à entrée alternative et sortie alternative objet de l'invention, la figure 9B illustre un variateur de vitesse qui comporte un autre exemple de dispositif de conversion de puissance multiniveaux modulaire à entrée alternative et sortie alternative objet de l'invention ;
La figure 10A illustre un convertisseur DC/AC triphasé à deux modules de commutation par bras et la figure 10B illustre des chronogrammes de la tension simple obtenue entre ses bornes de sortie alternatives R, S, T et le point milieu O et de la tension composée entre les bornes R et S lors d'une commande pleine onde.

Des parties identiques, similaires ou équivalentes des différentes figures décrites ci-après portent les mêmes références numériques de façon à faciliter le passage d'une figure à l'autre.

### EXPOSÉ DÉTAILLÉ DE MODES DE RÉALISATION PARTICULIERS

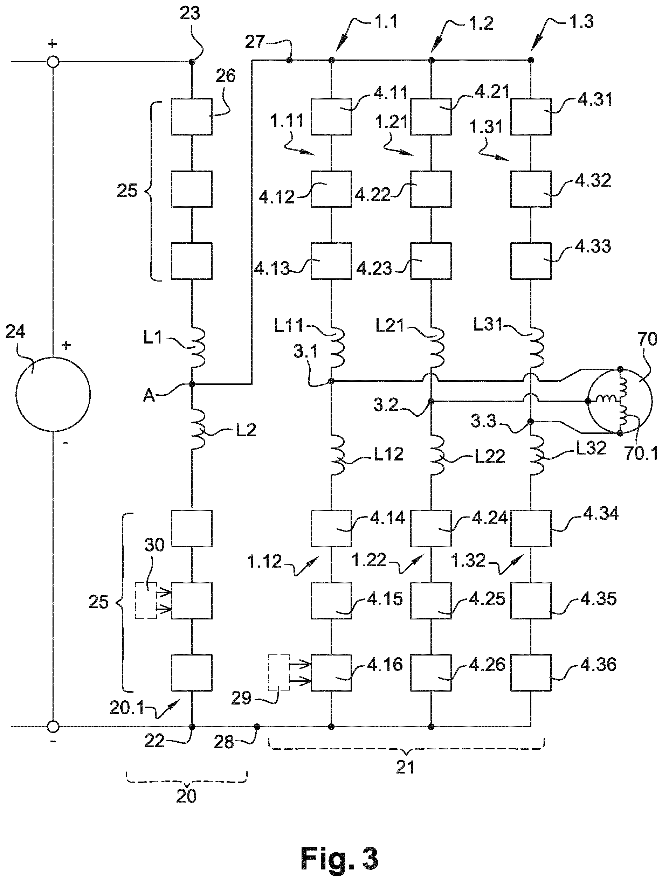

On va maintenant s'intéresser, en se référant à la figure 3, à un exemple de dispositif de conversion de puissance multiniveaux modulaire à sortie alternative et entrée continue objet de l'invention. Il s'agit d'un dispositif de conversion de puissance triphasé.

Il comporte en cascade un convertisseur DC/DC multiniveaux modulaire (ou hacheur) 20 et un convertisseur DC/AC multiniveaux modulaire (ou onduleur) 21.

Le convertisseur DC/DC multiniveaux 20 comporte un bras 20.1 dont les extrémités 22, 23 forment deux bornes d'entrée continues qui sont destinées, en utilisation, à être reliées à une alimentation électrique continue 24. Le bras 20.1 comporte deux demi-bras 25 en série ayant une borne commune A. Chaque demi-bras 25 comporte une chaîne de modules de commutation 26 reliée à la borne commune A via une inductance L1, L2. Ces modules de commutation sont similaires à ceux des figures 2A-2D, avec une paire d'éléments de commutation bidirectionnels en courant en série et un dispositif de stockage d'énergie flottant monté en parallèle avec ladite paire. On n'a pas représenté en détail chaque module 26 de commutation, il suffit de se référer aux figures 2A-2D pour voir leur structure.

Le convertisseur DC/AC multiniveaux modulaire 21 est similaire à celui décrit à la figure 1. Il n'est pas décrit de nouveau en détails. Tous les bras 1.1, 1.2, 1.3 du convertisseur sont reliés en parallèle et leurs extrémités définissent deux bornes continues référencées 27, 28. La borne 27 (positive) est reliée à la borne commune A du convertisseur DC/DC multiniveaux modulaire 20 et la borne 28 (négative) est reliée à l'une des extrémités 22 du bras 20.1, celle destinée à la borne négative de l'alimentation électrique continue 24. Ce sont les bornes d'entrée du convertisseur DC/AC multiniveaux modulaire 21 ou les bornes de sortie du convertisseur DC/DC multiniveaux modulaire 20. On suppose que tous les composants du convertisseur DC/AC multiniveaux modulaire 21 portent les mêmes références que sur la figure 1. Chaque demi-bras et donc chaque chaîne de modules sont donc reliés à une des bornes d'entrée continues 27 ou 28.

Dans la présente invention, le convertisseur DC/AC multiniveaux modulaire 21 a pour fonction de convertir la tension continue fournie par le convertisseur DC/DC multiniveaux modulaire 20 en tension alternative et de réguler la fréquence des signaux en sortie, c'est-à-dire des signaux présents sur les bornes communes 3.1, 3.2, 3.3, côté alternatif. Ces bornes communes 3.1, 3.2, 3.3 sont à relier à la charge, représentée dans cet exemple tel un moteur 70 avec trois enroulements montés en étoile et donc ayant une borne commune 70.1. Chaque enroulement est monté entre une des bornes commune 3.1, 3.2, 3.3 reliant les deux demi-bras d'un bras et la borne commune 70.1 de la charge 70. Au contraire de ce qui se passait dans l'art antérieur, l'amplitude de ces signaux est commandée, elle, par le convertisseur DC/DC multiniveaux modulaire 20. Il y a découplage entre la fonction de commande de la fréquence et celle de l'amplitude.

Une caractéristique du dispositif de conversion de puissance multiniveaux modulaire à sortie alternative objet de l'invention est que, pour chaque module du convertisseur DC/AC multiniveaux modulaire 21, la commande de ses commutateurs électroniques de puissance est telle que l'on limite au maximum le passage d'un courant, quel que soit son sens d'écoulement, dans les dispositifs de stockage d'énergie 4.3. Ce courant est un courant de charge ou courant positif ou un courant de décharge ou courant négatif. On limite ainsi la durée des états représentés aux figures 2B et 2D décrites précédemment pour éviter que les dispositifs de stockage d'énergie ne se chargent ou ne se déchargent trop longtemps.

On cherche à ne pas se trouver ou à se trouver le moins possible dans les configurations des figures 2B, 2D et à se trouver le plus souvent et le plus longtemps dans les configurations des figures 2A, 2C.

Une telle circulation du courant interne au convertisseur DC/AC multiniveaux modulaire 21 est possible si les commutateurs électroniques de puissance de chaque module de commutation sont commandés avec une commande pleine onde.

Sur la figure 3, on a représenté de manière schématique, avec la référence 29, et pour un seul des modules de commutation 4.16 seulement, des moyens de commande de ses commutateurs électroniques de puissance T116 et T216. Il est bien entendu que tels moyens de commande existent pour tous les commutateurs électroniques de puissance de tous les modules du convertisseur DC/AC multiniveaux modulaire 21.

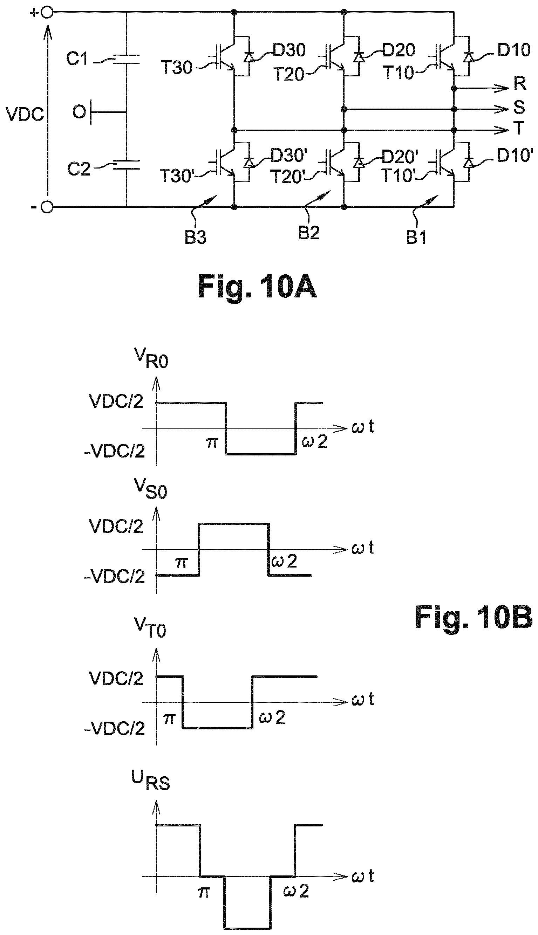

Pour faciliter la compréhension du fonctionnement du convertisseur DC/AC multiniveaux modulaire 21, on va d'abord expliquer en se référant à la figure 10A, le fonctionnement d'un convertisseur DC/AC conventionnel triphasé commandé par une commande pleine onde. Ce n'est pas un convertisseur multiniveaux. Il comporte trois bras B1, B2, B3 reliés par leurs bornes extrêmes en parallèle aux bornes d'une alimentation électrique continue délivrant une tension VDC et représentée par deux condensateurs C1, C2 en série ayant un point milieu O. Chaque bras se décompose en deux demi-bras qui ont une borne commun et ces bornes communes forment les bornes de sortie alternatives du convertisseur sont référencés R, S, T. Chaque demi-bras ne comporte qu'un élément de commutation bidirectionnel en courant avec un commutateur électronique de puissance et une diode en antiparallèle. Le bras B1 comporte le commutateur électronique de puissance T10, la diode D10, ils sont reliés à la borne positive (+) de la source d'alimentation électrique continue, soit au condensateur C1. Le bras B1 comporte aussi le commutateur électronique de puissance T10', la diode D10', ils sont reliés à la borne négative (-) de la source d'alimentation électrique continue, soit au condensateur C2. Le bras B2 comporte le commutateur électronique de puissance T20, la diode D2, ils sont reliés à la borne positive (+) de la source d'alimentation électrique continue, soit au condensateur C1. Le bras B2 comporte aussi le commutateur électronique de puissance T20', la diode D20', ils sont reliés à la borne négative (-) de la source d'alimentation électrique continue, soit au condensateur C2. Le bras B3 comporte le commutateur électronique de puissance T30, la diode D30, ils sont reliés à la borne positive (+) de la source d'alimentation électrique continue, soit au condensateur C1. Le bras B3 comporte aussi le commutateur électronique de puissance T30', la diode D30', ils sont reliés à la borne négative (-) de la source d'alimentation électrique continue, soit au condensateur C2.

La tension entre une borne de sortie alternative R, S ou T et le point milieu O varie entre +VDC/2 et -VDC/2 de la manière représentée sur la figure 10B avec une commande pleine onde. Les commutateurs électroniques de puissance de chaque module sont dans des états opposés à un temps mort près, car ils ne doivent pas être passants en même temps au risque de court-circuiter la source d'alimentation électrique VDC. Sur une période du signal de sortie, chaque commutateur électronique de puissance est passant pendant la moitié du temps. Les trois premiers chronogrammes représentent respectivement les tensions simples V_{RO}, V_{SO}, V_{TO} et le dernier chronogramme représente la tension composée U_{RS} entre la borne R et la borne S.

Lorsque le commutateur électronique de puissance T10 est passant, la tension de la borne de sortie R passe à +VDC/2. Si le courant parcourant le bras B1 est positif, il passe par le commutateur électronique de puissance T10. Si le courant parcourant le bras B1 est négatif, il passe par la diode D10. Lorsque le commutateur électronique de puissance T10' est passant, la tension de la borne de sortie R passe à -VDC/2. Si le courant parcourant le bras B1 est positif, il passe par la diode D10'. Si le courant parcourant le bras B1 est négatif, il passe par le commutateur électronique de puissance T10'.

Pour chacun des bras 1.1, 1.2, 1.3, pendant une moitié de la période, l'inductance L11, L21, L31 est reliée à la borne positive d'entrée 27 et pendant l'autre moitié, l'inductance L12, L22, L32 est reliée à la borne négative d'entrée 28. A cause de la présence de ces inductances, le potentiel présent à la borne positive d'entrée 27 ou à la borne négative d'entrée n'est jamais présent sur les bornes communes 3.1, 3.2, 3.3. On ne contrôle pas directement le potentiel sur ces bornes communes.

Dans le convertisseur DC/AC 21 illustré à la figure 3, pour obtenir la tension +VDC sur un nœud commun 40 relié à une des inductances L11, L21, L31, les moyens de commande 29 rendent passants simultanément les premiers commutateurs électroniques de puissance T111, T112, T113 de tous les modules de commutation 4.11, 4.12, 4.13 de la première chaîne de modules. Les premiers commutateurs électroniques de puissance T114, T115, T116 de tous les modules de commutation 4.14, 4.15, 4.16 de la seconde chaîne de modules eux ne doivent pas être passants. Ils sont bloqués car sinon on crée un court-circuit de bras.

Pour être certain de ne pas obtenir ce court-circuit, les moyens de commande 29 rendent passants également tous les seconds commutateurs électroniques de puissance T214, T215, T216 de tous les modules de commutation 4.14, 4.15, 4.16 de la seconde chaîne de modules, et ce en synchronisme avec la commande des premiers commutateurs électroniques de puissance T111, T112, T113 de la première chaîne de modules.

Pour obtenir la tension -VDC sur une borne extrême des inductances L12, L22, L32 opposée à celle reliée à une borne commune 3.1, 3.2, 3.3, les moyens de commande 29 rendent passants simultanément les premiers commutateurs électroniques de puissance T114, T115, T116 de tous les modules de commutation 4.14, 4.15, 4.16 de la seconde chaîne de modules. Les premiers commutateurs électroniques de puissance T111, T112, T113 de tous les modules de commutation 4.11, 4.12, 4.13 de la première chaîne de modules eux ne doivent pas être passants. Ils sont bloqués car sinon on crée un court-circuit de bras.

Pour être certain de ne pas obtenir ce court-circuit, les moyens de commande 29 rendent passants également tous les seconds commutateurs électroniques de puissance T211, T212, T213 de tous les modules de commutation 4.11, 4.12, 4.13 de la première chaîne de modules, et ce en synchronisme avec la commande des premiers commutateurs électroniques de puissance T114, T115, T116 de la seconde chaîne de modules.

Dans les modules ayant leur premier commutateur électronique de puissance passant, le courant passera à travers lui s'il est positif (comme sur la figure 2A) et passera par la première diode s'il est négatif (comme sur la figure 2C). Il ne passe plus par le dispositif de stockage d'énergie. Le courant ne circule que dans les modules de commutation dont le premier commutateur de puissance est passant. Il ne passera pas par les modules de commutation dont le second commutateur de puissance est passant.

Les premiers commutateurs électroniques de puissance d'une chaîne de modules de commutation et les premiers commutateurs électroniques de puissance de l'autre chaîne de modules de commutation sont dans des états complémentaires à un temps mort près.

Les seconds commutateurs électroniques de puissance d'une chaîne de modules de commutation et les seconds commutateurs électroniques de puissance de l'autre chaîne de modules de commutation sont dans des états complémentaires à un temps mort près.

Les commutateurs électroniques de puissance d'un même module de commutation sont dans des états complémentaires à un temps mort près.

Quand on rend passant, dans un module de commutation, un second commutateur électronique de puissance, on retrouve aux bornes du premier commutateur électronique de puissance de ce module de commutation, la tension du dispositif de stockage d'énergie.

Dans la présente invention, avec la commande pleine onde, les seconds commutateurs électroniques de puissance n'interviennent pas dans la génération des signaux de sortie. Mais en les rendant passants et en les associant au dispositif de stockage d'énergie, ils ont une fonction d'écrêtage de la tension appliquée aux bornes des premiers commutateurs électroniques de puissance qui sont alors à l'état bloqué. Ils ont donc toute leur place dans le montage.

Ainsi les dispositifs de stockage d'énergie 4.3 ne sont alors utilisés que comme écrêteurs de signaux. Les valeurs des capacités des dispositifs de stockage d'énergie 4.3 peuvent être réduites par rapport à celles nécessaires avec une commande MLI classique.

Dans la présente invention, dans le cadre d'une application à une charge de type moteur asynchrone triphasé, la fréquence peut être de l'ordre du Hertz voire jusqu'à la dizaine de Hertz et le rapport cyclique de 0,5. Le rapport cyclique correspond à la moitié de la période du signal désiré en sortie du dispositif de conversion de puissance multiniveaux modulaire à sortie alternative.

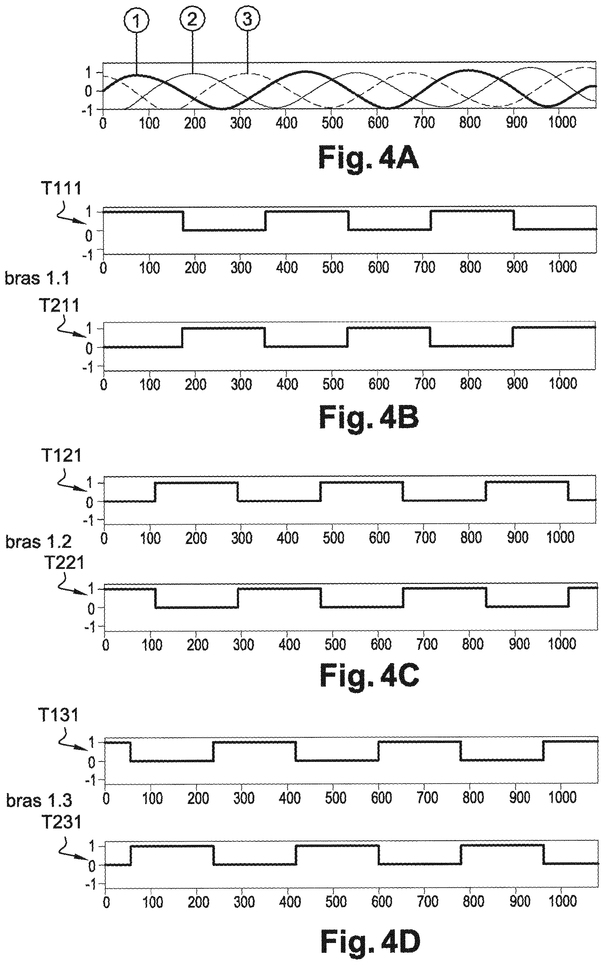

Sur la figure 4A, on a représenté des signaux de consigne sinusoïdaux qui vont servir pour déterminer les instants de commutation des premier et second commutateurs électroniques de puissance d'un module de commutation du convertisseur DC/AC multiniveaux modulaire 21. Ces modules sont tous dans une première chaîne de modules. La sinusoïde ① est relative, par exemple, aux commutateurs électroniques de puissance T111, T211 du module de commutation 4.11 du bras 1.1. La sinusoïde ② est relative, par exemple, aux commutateurs électroniques de puissance T121, T221 du module de commutation 4.21 du bras 1.2. La sinusoïde ③ est relative aux commutateurs électroniques de puissance T131, T231 du module de commutation 4.31 du bras 1.3. Les instants de commutation correspondent aux instants où le signal de consigne change de signe.

On a représenté sur le chronogramme des figures 4B, 4C, 4D l'état des premier et second commutateurs électroniques de puissance T111 et T211, T121 et T221, T131 et T231 respectivement lors d'une commande pleine onde. Les commandes sur les différents bras sont décalées d'un tiers de période. A l'état 1 ils sont passants et à l'état 0 ils sont bloqués. La commutation des commutateurs électroniques de puissance est provoquée par le changement de signe du signal de consigne associé.

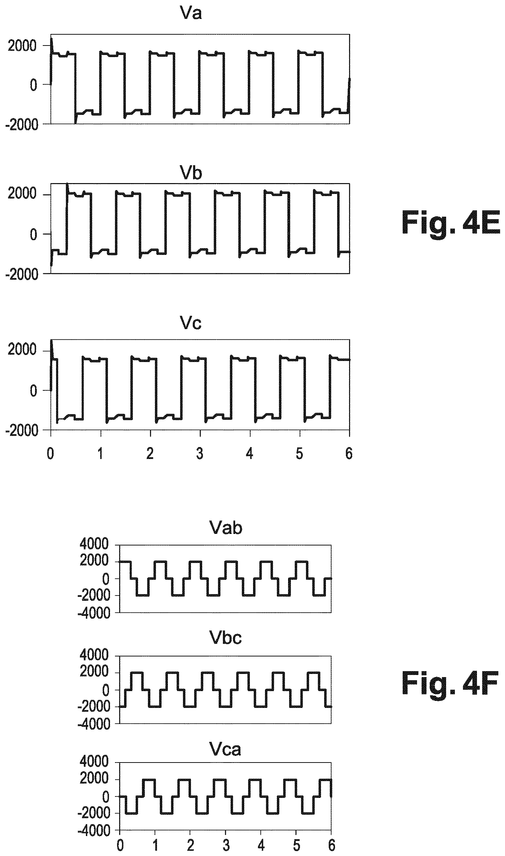

Sur la figure 4E, on a représenté l'évolution, en fonction du temps, de la tension simple appelée respectivement Va, Vb, Vc. La tension simple Va, Vb, Vc est la tension prise entre chaque borne commune 3.1, 3.2, 3.3 et un point milieu fictif de l'alimentation continue (bus continu) d'entrée du convertisseur DC/AC multiniveaux modulaire 21. Cette tension simple possède deux paliers, l'un positif et l'autre négatif. Il y un décrochement au sommet de ces paliers, cela est dû au fait que le potentiel sur les bornes communes 3.1, 3.2, 3.3 n'est pas directement contrôlé.

Sur la figure 4F, on a représenté l'évolution, en fonction du temps, de la tension composée prélevée entre deux bornes communes. La tension Vab est présente entre les bornes 3.1 et 3.2, la tension Vbc est présente entre les bornes 3.2 et 3.3 et la tension Vca est présente entre les bornes 3.3 et 3.1. Cette tension composée possède trois paliers un nul, un positif et un négatif.

Au final, quel que soit le nombre de modules de commutation mis en série dans les demi-bras, la tension composée a toujours trois niveaux. La commande fournie par les moyens de commande 29 est simple car tous les modules de commutation d'un même demi-bras sont commandés de manière identique en synchronisme. Leurs premiers commutateurs électroniques de puissance sont dans un même état en même temps. Leurs seconds commutateurs électroniques de puissance sont dans un même état en même temps, cet état étant opposé à celui des premiers commutateurs électroniques de puissance. Les modules d'un même bras, mais appartenant à des demi-bras différents sont commandés de manière opposée en synchronisme. Par contre, la forme des signaux de sortie est assez éloignée d'une sinusoïde qui est toujours la forme d'onde recherchée pour l'alimentation de la charge alternative.

Avec cette commande pleine onde, pour chaque bras, selon le signe de la tension de consigne, on commande volontairement l'état des premier et second commutateurs électroniques de puissance de tous les modules d'un de ses demi-bras en synchronisme de manière à ce que le courant circulant dans chacun des modules de ce demi-bras ne traverse pas le dispositif de stockage d'énergie 4.3. On réduit fortement le besoin en termes de capacité et l'ondulation de tension aux bornes des dispositifs de stockage d'énergie. Les dispositifs de stockage d'énergie 4.3 ont une fonction d'écrêtage de surtensions apparaissant lors des commutations des premier et second commutateurs électroniques de puissance d'un module qui ne sont pas synchrones, c'est-à-dire lors des temps morts.

Le dimensionnement des dispositifs de stockage d'énergie est obtenu avec la formule classique I=CdU/dt avec C capacité d'un dispositif de stockage d'énergie d'un modules de commutation du convertisseur DC/AC, I courant le traversant et U tension à ses bornes. On limite au maximum le temps de passage du courant dans le dispositif de stockage d'énergie.

Avec la commande pleine onde, les dispositifs de stockage d'énergie ne sont pratiquement plus sollicités, et peuvent avoir des valeurs de capacité vingt fois plus petites que celles qu'elles auraient si les commutateurs électroniques de puissance étaient commandés avec une commande MLI classique.

Pour améliorer la forme d'onde des signaux en sortie du dispositif de conversion de puissance à sortie alternative objet de l'invention et réduire les harmoniques, on peut être amené, au lieu de retenir la commande pleine onde pure pendant tout l'intervalle de temps de fonctionnement du dispositif de conversion de puissance, à utiliser une commande mixte pleine onde associée à une commande MLI.

Pendant l'intervalle de temps de fonctionnement du dispositif de conversion de puissance, on va utiliser la commande MLI lorsque l'amplitude du courant alternatif dans la charge 70 est faible, inférieure à un seuil. On utilisera la commande pleine onde, lorsque l'amplitude du courant alternatif dans la charge 70 est élevée, supérieure ou égale au seuil. Pendant la commande MLI, les modules d'un demi-bras sont commandés successivement et pas simultanément. Ce courant alternatif circulant dans la charge est aussi appelé courant de sortie du dispositif de conversion de puissance multiniveaux modulaire objet de l'invention.

Cette commande MLI délivrée par les moyens de commande 29, revient à autoriser le passage d'un courant dans la seconde diode des modules de commutation d'un premier demi-bras et donc dans le dispositif de stockage d'énergie 4.3 des modules du premier demi-bras lorsque le courant dans la charge 70 est positif et d'amplitude inférieure au seuil. Cette commande MLI revient à autoriser le passage d'un courant dans le second commutateur électronique de puissance des modules de commutation d'un second demi-bras et donc dans le dispositif de stockage d'énergie des modules du second demi-bras lorsque le courant dans la charge 70 est négatif et d'amplitude inférieure au seuil.

En utilisant cette commande mixte, l'augmentation de la tension aux bornes du dispositif de stockage d'énergie 4.3 des modules est limitée et raisonnable. La valeur à donner aux dispositifs de stockage d'énergie 4.3 est bien inférieure à celle qu'elle aurait si une commande MLI classique était employée en permanence.

En effet, le dimensionnement des dispositifs de stockage d'énergie avec une commande MLI classique est basé sur la fréquence du signal de sortie pour le paramètre temporel (dt) et sur le courant (I) chargeant le dispositif de stockage d'énergie. La capacité à donner aux dispositifs de stockage d'énergie correspond au cas où le courant est maximum et la fréquence minimum. Dans la présente invention, le courant dans les dispositifs de stockage d'énergie n'est jamais très élevé puisque le courant dans la charge 70 a une amplitude limitée inférieure au seuil.

Cette commande mixte pleine onde associée à une commande MLI peut être réalisée en comparant un signal de référence sinusoïdal ou sinusoïdal tronqué appelé modulante avec un signal en dents de scie appelé porteuse.

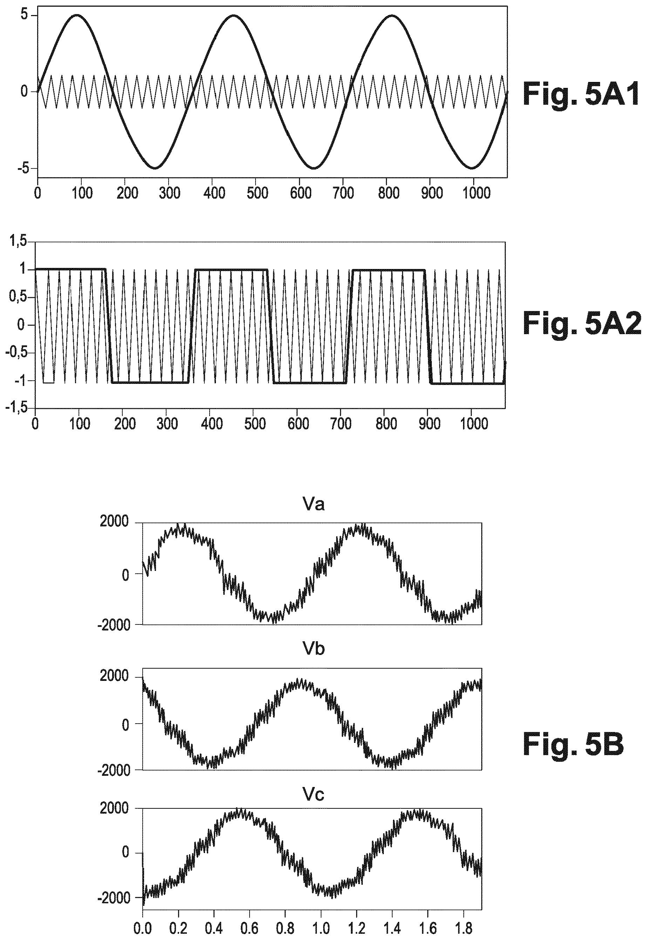

On peut se référer aux figures 5A1 et 5A2. Sur la figure 5A1, le signal de référence est une sinusoïde complète et sur la figure 5A2 le signal de référence est une sinusoïde tronquée au niveau des crêtes. Le signal de référence a comme fréquence la fréquence du signal désiré en sortie et une amplitude supérieure à celle du signal en dents de scie, si la sinusoïde est complète, ou égale à celle du signal en dent de scie, si la sinusoïde est tronquée. Le signal en dents de scie a pour fréquence, la fréquence de commutation des commutateurs électroniques de puissance. C'est une fréquence plus élevée que celle du signal de référence, elle peut être de l'ordre de 10³ Hertz voire plus.

Dans une commande MLI classique, l'amplitude du signal de référence est toujours inférieure à celui de la porteuse.

Tant que l'amplitude du signal de référence est inférieure à celle de la porteuse, on utilise la commande MLI, et la tension Va, Vb, Vc présente au niveau des bornes communes 3.1, 3.2, 3.3 suit assez fidèlement l'allure du signal de référence. Dans le bras 1.1 par exemple, le courant interne aux modules de commutation 4.11 à 4.16 passe par les dispositifs de stockage d'énergie 4.3 et soit les seconds commutateurs électroniques de puissance T211, T212, T213, T214, T215, T216, soit les secondes diodes D211, D212, D213, D214, D215, D216, selon que le courant est positif ou négatif, pendant des intervalles de temps qui correspondent au blocage des premiers commutateurs électroniques de puissance T111, T112, T113, T114, T115, T116. Les commandes des commutateurs électroniques de puissance des différents modules d'un demi-bras sont successives. Les commandes des commutateurs électroniques de puissance de deux modules homologues appartenant à deux demi-bras d'un même bras sont synchrones.

Dès que l'amplitude du signal de référence devient égale ou supérieure à celle de la porteuse, on utilise la commande pleine onde et la tension Va, Vb, Vc présente au niveau des bornes communes 3.1, 3.2, 3.3 se décale de l'allure du signal de référence, et possède une allure comparable aux allures montrées sur les figures 4E aux alentours des crêtes. Dès que l'amplitude du signal de référence a atteint celle de la porteuse, cela signifie que le courant dans la charge a atteint le seuil. Dans le bras 1.1 par exemple, le courant interne aux modules de commutation 4.11 à 4.16 ne passe pas par les dispositifs de stockage d'énergie 4.3, dans la mesure où les premiers commutateurs électroniques de puissance T111, T112, T113 ou T114, T115, T116 des modules de commutation 4.11, 4.12, 4.13 ou 4.14, 4.15, 4.16 d'un même demi-bras restent passants.

Sur la figure 5B, on a représenté, en fonction du temps, l'évolution de la tension simple qui est la tension prise entre chaque borne commune 3.1, 3.2, 3.3 et la borne commune 70.1 de la charge 70, cette tension simple étant appelée respectivement Va, Vb, Vc. Les échelles sont différentes entre les figures 5A et 5B.

Avec une telle commande mixte pleine onde associée à une commande MLI, en ajustant les amplitudes du signal de référence et de la porteuse, on peut trouver un compromis permettant de limiter la tension aux bornes des dispositifs de stockage d'énergie tout obtenant des tensions au niveau des bornes communes 3.1, 3.2, 3.3 dont la fréquence est contrôlée et qui se rapprochent plus de la sinusoïde désirée.

En ce qui concerne le convertisseur DC/DC multiniveaux modulaire 20, son bras 20.1 peut être formé de modules de commutation 26 identiques à ceux du convertisseur DC/AC multiniveaux modulaire 21.

Ses modules de commutation 26 sont commandés également avec une commande pleine onde, comme le convertisseur DC/AC multiniveaux modulaire 21. On a représenté sur la figure 3, de manière schématique, avec la référence 30 et pour un seul des modules de commutation 26, des moyens de commande de ses commutateurs électroniques de puissance.

Par contre la fréquence de la commande pleine onde sera plus élevée que celle utilisée dans le convertisseur DC/AC multiniveaux modulaire 21. Cette fréquence peut être de l'ordre de la centaine d'Hertz avec un rapport cyclique α compris entre 0,1 et 0,9. Le rapport cyclique α correspond au rapport entre le temps de conduction des premiers commutateurs électroniques de puissance et la période de découpage. On a une relation de type Vs= aVe entre la tension d'entrée Ve et la tension de sortie Vs du convertisseur DC/DC multiniveaux modulaire 20. Le contrôle de la valeur du rapport cyclique α permet d'ajuster l'amplitude de la tension continue de sortie Vs.

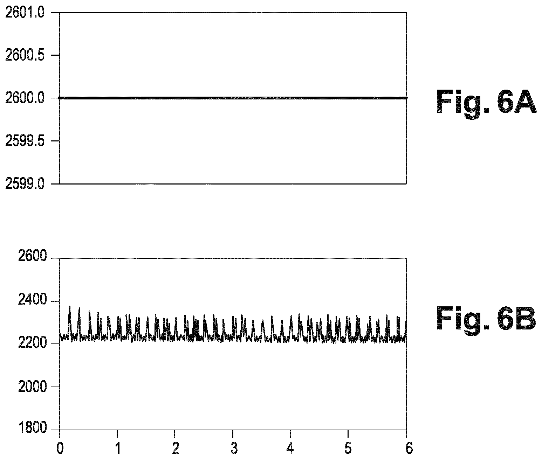

La figure 6A illustre l'évolution, dans le temps, de la tension continue délivrée par l'alimentation électrique continue 24 et la figure 6B illustre l'évolution dans le temps de la tension de sortie continue présente aux bornes 27 et 28 qui correspondent aux bornes de sortie du convertisseur DC/DC multiniveaux modulaire 20 pour une valeur donnée du rapport cyclique a.

Il est bien sur possible de commander les modules 26 du convertisseur DC/DC multiniveaux modulaire 20 avec une commande MLI dans laquelle le signal de référence est une constante et la porteuse est un signal en dents de scie.

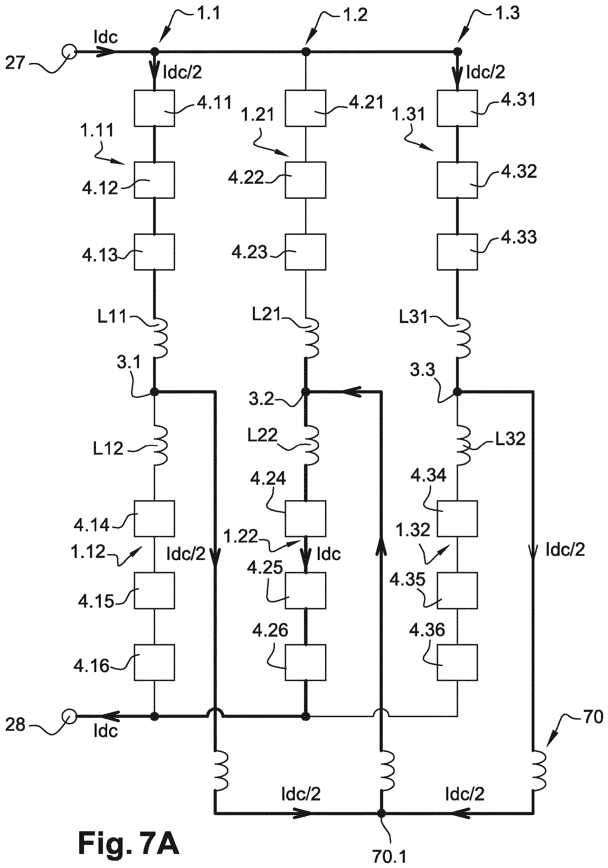

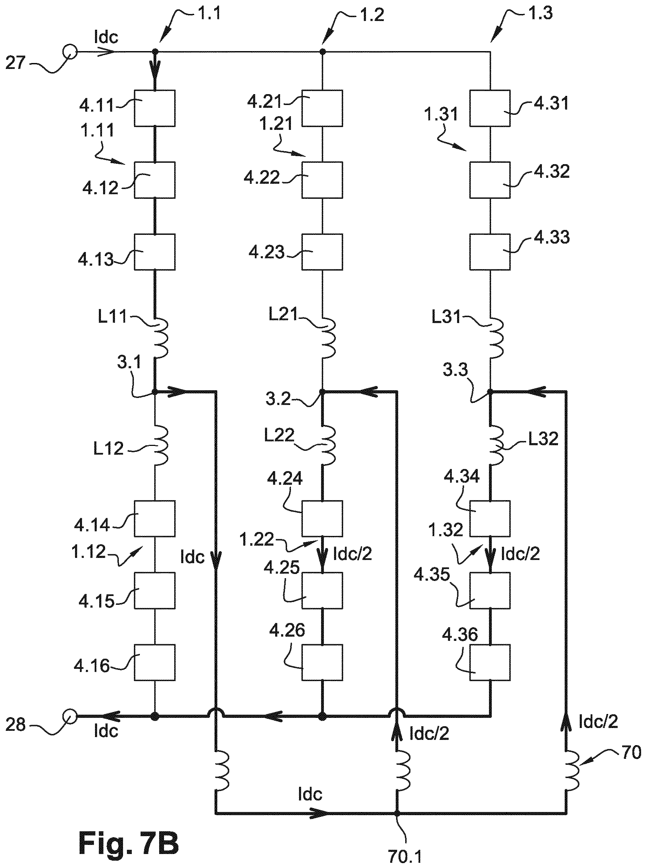

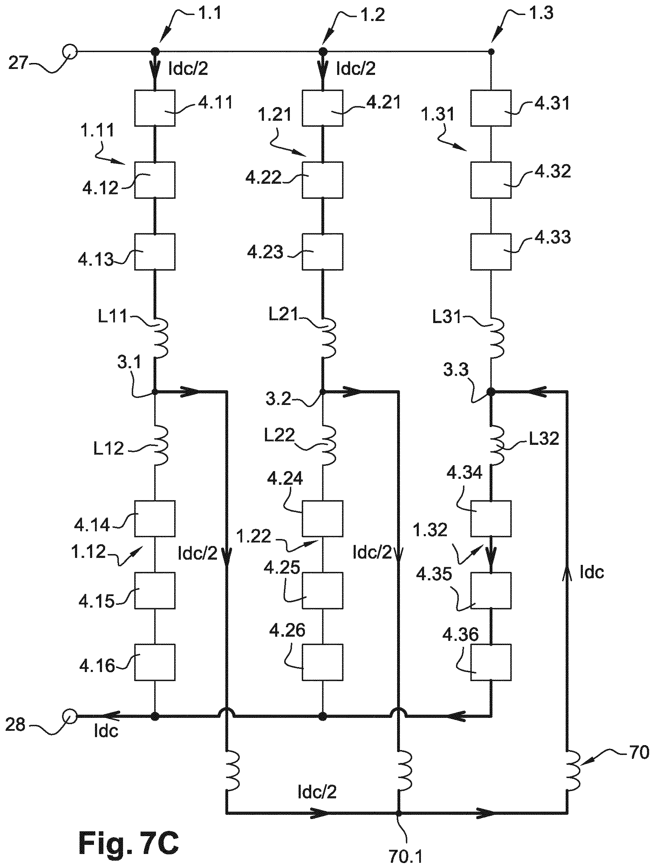

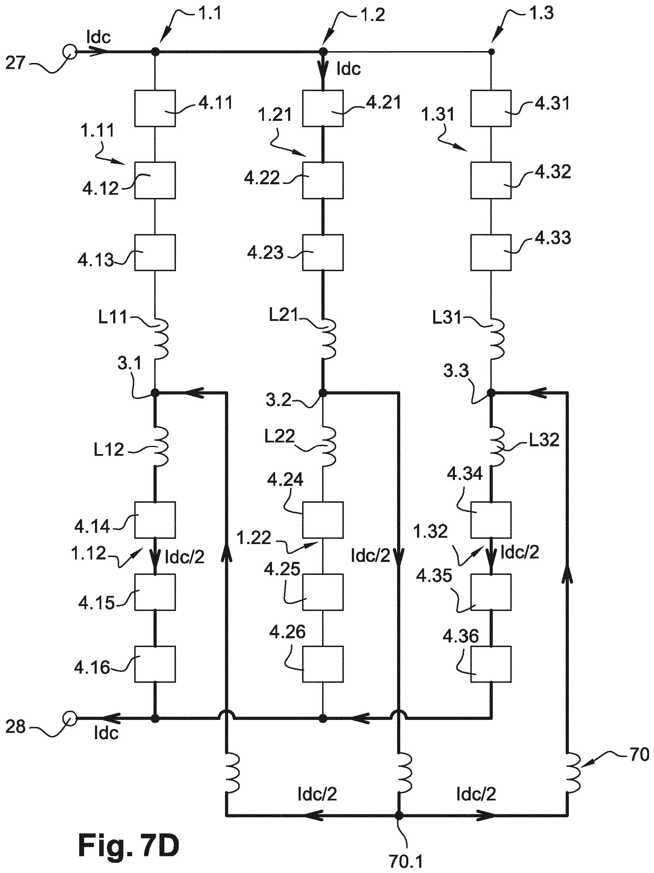

On va maintenant s'intéresser aux figures 7A, 7B, 7C, 7D qui montrent des trajets des courants dans le convertisseur DC/AC multiniveaux modulaire 21 triphasé et dans la charge triphasée 70 dans la variante de la commande pleine onde. Chacune des phases de la charge est reliée à une borne commune 3.1, 3.2, 3.3.

Sur la figure 7A, le courant de charge Idc entrant se répartit sensiblement équitablement dans le premier demi-bras 1.11 de la phase 1 et dans le premier demi-bras 1.31 de la phase 3, il parcourt la charge 70 et revient dans le convertisseur DC/AC multiniveaux modulaire 21 par le second demi-bras 1.22 de la phase 2. Sur la figure 7B, le courant de charge Idc passe en totalité dans le premier demi-bras 1.11 de la phase 1, il parcourt la charge 70 et revient dans le convertisseur DC/AC multiniveaux modulaire 21, par le second demi-bras 1.22 de la phase 2 le second demi-bras 1.32 de la phase 3 en se répartissant sensiblement équitablement dans chacun d'entre eux. Sur la figure 7C, le courant de charge Idc se répartit sensiblement équitablement dans le premier demi-bras 1.11 de la phase 1 et dans le premier demi-bras 1.21 de la phase 2, il parcourt la charge 70 et revient dans le convertisseur DC/AC multiniveaux modulaire 21 par le second demi-bras 1.32 de la phase 3. Sur la figure 7D, le courant de charge Idc passe en totalité dans le premier demi-bras 1.21 de la phase 2, il parcourt la charge 70 et revient dans le convertisseur DC/AC multiniveaux modulaire 21 par de second demi-bras 1.12 de la phase 1 et le second demi-bras 2.32 de la phase 3 en se répartissant sensiblement équitablement dans chacun d'entre eux. Ces schémas correspondent à un courant de charge Idc positif.

A cause de la présence des inductances L11, L12, L21, L22, L31, L32, lorsque l'on arrête de commander les modules d'un demi-bras, par exemple du haut, et que l'on passe à la commande des modules d'un demi-bras, par exemple du bas, le courant met un certain temps à passer du demi-bras du haut au demi-bras du bas. Mais vu les échelles de temps, on peut considérer que le courant en sortie est constant et que la transition qui se produit est négligeable. Mais c'est pendant cette transition, que du courant va passer dans les dispositifs de stockage d'énergie.

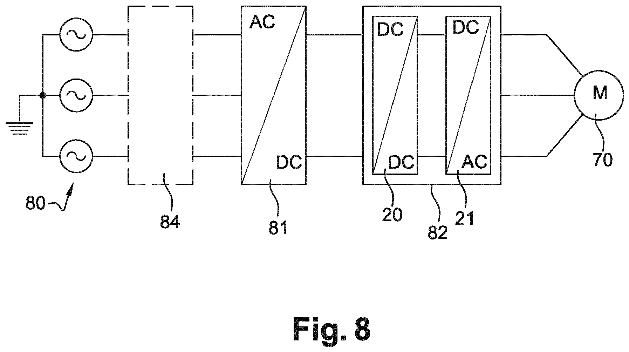

On va maintenant se référer à la figure 8 qui représente schématiquement un variateur de vitesse objet de l'invention. Ce variateur inclut un dispositif de conversion de puissance multiniveaux modulaire à sortie alternative et entrée continue 82 objet de l'invention.

Le variateur de vitesse comporte à partir d'une alimentation électrique alternative triphasée 80, en cascade, un convertisseur AC/DC 81, puis le dispositif de conversion de puissance DC/AC multiniveaux modulaire 82 objet de l'invention. La charge 70 est destinée à être reliée en sortie du convertisseur DC/AC multiniveaux modulaire 21. En fonction de la performance harmonique du dispositif de conversion de puissance DC/AC objet de l'invention, il peut ne plus être nécessaire d'utiliser des filtres de lissage qui étaient nécessaires avec l'emploi d'un convertisseur DC/AC multiniveaux de l'art antérieur, comme les convertisseurs NPC ou ANPC, limités à cinq niveaux de tension. La commande mixte pleine onde associée à une commande MLI permet de réduire les harmoniques par rapport à la commande pleine onde. On dispose en sortie du dispositif de conversion de puissance DC/AC multiniveaux modulaire 82 de plus de niveaux de tension que dans la variante utilisant la commande pleine onde. L'alimentation électrique alternative triphasée 80 est le réseau alternatif

Dans les variateurs de vitesse de l'art antérieur qui utilisaient un convertisseur DC/AC multiniveaux modulaire comme celui de la figure 1, on retrouve également un convertisseur AC/DC entre l'alimentation électrique alternative triphasée et le convertisseur DC/AC multiniveaux modulaire. Il fallait prévoir un filtre LC de filtrage du courant et de la tension placé entre le convertisseur DC/AC multiniveaux modulaire et le convertisseur AC/DC. On pouvait également prévoir un filtre LC de lissage de courant branché entre l'alimentation électrique alternative triphasée et le convertisseur AC/DC, et un filtre LC de lissage de tension entre le convertisseur DC/AC multiniveaux modulaire et la charge.

Dans le variateur de vitesse qui utilise un dispositif de conversion de puissance DC/AC modulaire de l'invention 82, un transformateur n'est pas obligatoire. S'il était utilisé, il serait branché entre l'alimentation électrique alternative triphasée 80 et le convertisseur AC/DC 81. Il est représenté en pointillés car optionnel avec la référence 84. Il sert à adapter le niveau de tension de l'alimentation électrique alternative 80 qui est, dans les applications de variateurs de vitesse moyenne tension, par exemple, comprise entre 2,3kV et 15 kV.

Le transformateur est un composant bien souvent volumineux et onéreux. On peut s'en passer grâce à la chaîne de modules en série, ce qui permet de supporter directement le niveau de tension de l'alimentation électrique alternative triphasée.

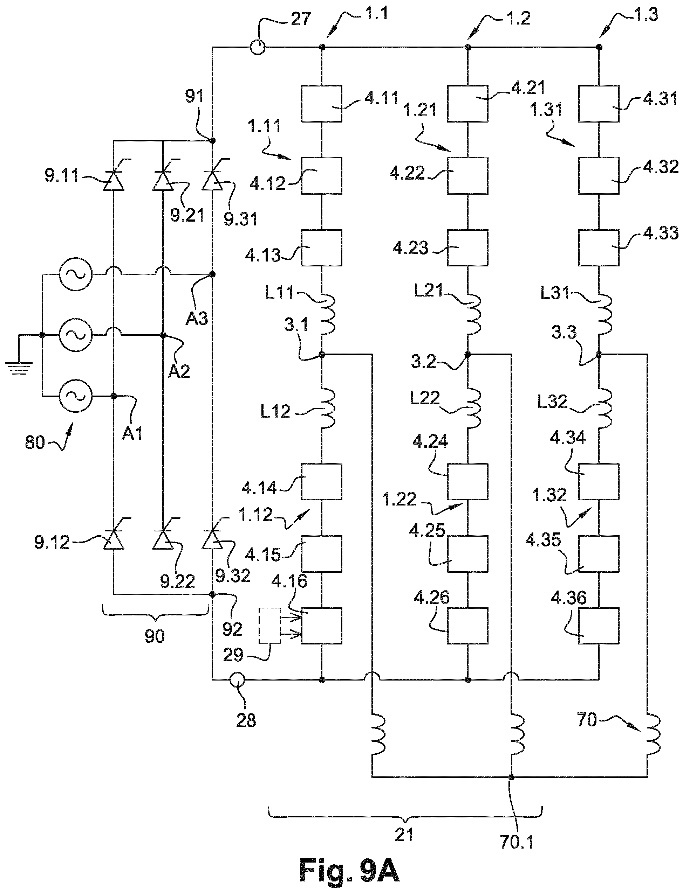

La figure 9A illustre maintenant un autre exemple, non limitatif, de dispositif de conversion de puissance AC/AC multiniveaux modulaire objet de l'invention. Dans cet exemple le dispositif de conversion de puissance AC/AC multiniveaux modulaire est triphasé. Il pourrait bien sûr être monophasé. Ce dispositif de conversion de puissance AC/AC multiniveaux modulaire peut servir tel quel de variateur de vitesse. Il comporte un convertisseur DC/AC multiniveaux modulaire 21 tel que celui décrit à la figure 2, mais pas de convertisseur multiniveaux modulaire DC/DC. Au lieu du convertisseur multiniveaux modulaire DC/DC, il y a un convertisseur AC/DC 90 relié au convertisseur DC/AC multiniveaux modulaire 21. Ce convertisseur AC/DC 90 est destiné à être relié d'un côté à une alimentation électrique alternative 80. De l'autre, il est relié aux deux bornes 27, 28 continues définies par les extrémités des bras du convertisseur DC/AC multiniveaux modulaire 21.

Le convertisseur AC/DC 90 peut être un convertisseur AC/DC 90 de type pont redresseur à commutation commandée. Il comporte trois bras 90.1, 90.2, 90.3 montés en parallèle, leurs extrémités 91, 92 définissant deux bornes continues reliées aux bornes continues 27, 28 du convertisseur DC/AC multiniveaux modulaire 21. Chaque bras 90.1, 90.2, 90.3 comporte deux interrupteurs élémentaires 9.11, 9.12, 9.21, 9.22, 9.31, 9.32 à semi-conducteur en série ayant un nœud commun A1, A2, A3, chacun de ces nœuds communs A1, A2, A3 définissant une borne alternative d'entrée (ou entrée alternative) destinée à être reliée à l'alimentation électrique alternative 80.

Sur la figure 9A, les interrupteurs élémentaires 9.11, 9.12, 9.21, 9.22, 9.31, 9.32 ont été représentés comme des thyristors, mais ce n'est qu'un exemple non limitatif. Il est bien sûr possible de les remplacer par d'autres types d'interrupteurs à semi-conducteurs pouvant être commandés.

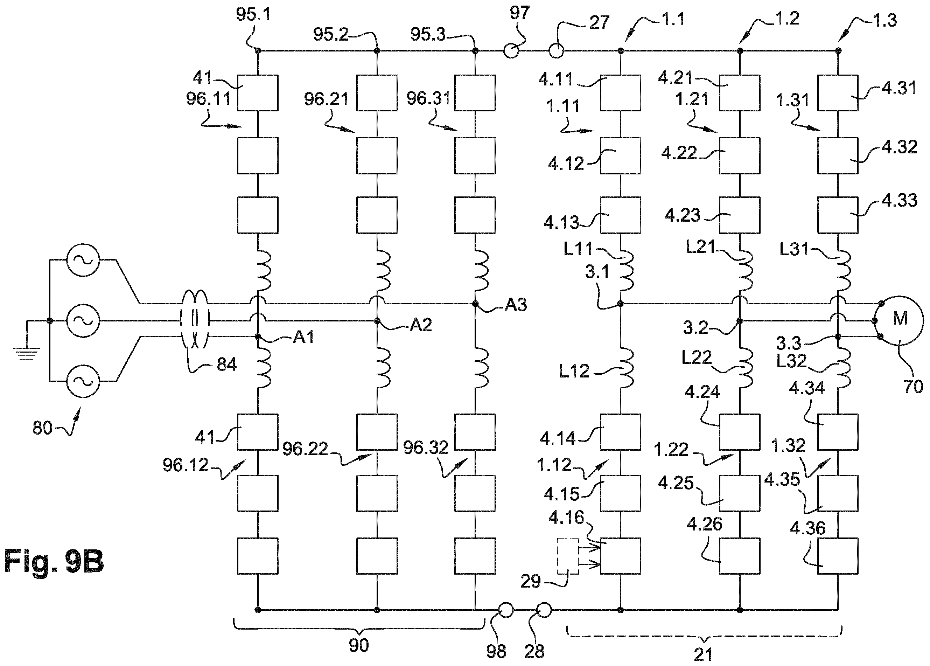

Dans un autre mode de réalisation illustré sur la figure 9B, le convertisseur AC/DC 90 a été remplacé par un convertisseur AC/DC multiniveaux modulaire ayant des modules 41 similaires à celui du convertisseur DC/AC multiniveaux modulaire montré sur la figure 1, ce convertisseur AC/DC multiniveaux modulaire possède alors plusieurs bras 95.1, 95.2, 95.3 montés en parallèle dont les extrémités définissent des bornes continues 97, 98. Ces bornes continues sont reliées aux bornes continues 27, 28 du convertisseur DC/AC multiniveaux modulaire 21 et donc confondues avec elles. Chaque bras 95.1, 95.2, 95.3 comporte deux chaînes 96.11, 96.12, 96.21, 96.22, 96.31, 96.32 de modules de commutation 41 montées en série ayant une borne commune respectivement 93.1, 93.2, 93.3. La connexion à ces bornes communes se fait via une inductance. Ces bornes communes 93.1, 93.2, 93.3 définissent des bornes alternatives à relier à l'alimentation électrique alternative 80. Chaque module de commutation 41 est identique à celui illustré sur les figures 2A-D. Sur la figure 9B, on a prévu un transformateur 84 destiné à être relié d'un côté à l'alimentation électrique alternative 80 et relié de l'autre à l'entrée alternative du convertisseur à entrée alternative et sortie continue 90 du dispositif de conversion de puissance multiniveaux modulaire. Le transformateur 84 est optionnel.

Dans ces modes de réalisation le convertisseur AC/DC est utilisé pour ajuster l'amplitude du signal réalisé par le convertisseur multiniveaux modulaire DC/AC.

Bien que plusieurs exemples de réalisation de la présente invention aient été représentés et décrits de façon détaillée, on comprend que différents changements et modifications peuvent être apportés sans sortir du cadre de l'invention.

## Revendications

1. Dispositif de conversion de puissance multiniveaux modulaire à sortie alternative et entrée alternative ou continue comportant :
un convertisseur DC/AC multiniveaux modulaire (21) à plusieurs bras (1.1, 1.2, 1.3) montés en parallèle dont les extrémités définissent des bornes continues d'entrée (27, 28), chaque bras comportant deux chaînes de modules de commutation (4.11, 4.12, 4.13, 4.14, 4.15, 4.16) en série, reliées à une borne commune (3.1, 3.2, 3.3), cette borne commune définissant une borne alternative de sortie du dispositif de conversion de puissance multiniveaux modulaire, chaque module de commutation (4.11, 4.12, 4.13, 4.14, 4.15, 4.16) comportant au moins une paire de commutateurs électroniques de puissance (T111, T211) agencés en série, montée aux bornes d'un dispositif de stockage d'énergie (4.3), les commutateurs électroniques de puissance (T111, T112, T113) d'une même chaîne, reliés à une borne de même polarité du dispositif de stockage d'énergie (4.3) étant qualifiés d'homologues, le convertisseur DC/AC multiniveaux modulaire (21) étant destiné à ajuster la fréquence en sortie du dispositif de conversion multiniveaux modulaire et comportant en outre des moyens de commande (29) des commutateurs électroniques de puissance pour les mettre dans un état passant ou bloqué, **caractérisé en ce que**
les moyens de commande (29) sont adaptés pour appliquer aux commutateurs électroniques de puissance, pendant au moins une partie d'un intervalle de temps de fonctionnement du dispositif de conversion de puissance, une commande pleine onde, les modules (4.11, 4.12, 4.13) d'une même chaîne ayant alors des commutateurs électroniques de puissance homologues (T111, T112, T113) dans un même état simultanément,
les moyens de commande (29) sont adaptés pour appliquer, pendant au moins une autre partie restante de l'intervalle de temps, aux commutateurs électroniques de puissance (T111, T211, T112, T212, T113, T213) une commande MLI, la commande MLI étant appliquée lorsqu'un courant de sortie du dispositif de conversion de puissance multiniveaux modulaire est inférieur à un seuil et la commande pleine onde lorsque le courant de sortie est supérieur ou égal au seuil,
et **en ce qu'**il comporte en outre
un convertisseur à sortie continue et entrée continue ou alternative (20) comportant deux bornes de sortie (A, 22) reliées aux bornes continues (27, 28) d'entrée du convertisseur multiniveaux modulaire (21), ce convertisseur à sortie continue étant destiné à ajuster l'amplitude en sortie du dispositif de conversion de puissance.

2. Dispositif de conversion de puissance multiniveaux modulaire selon la revendication 1, dans lequel chaque module (4.11,4.12, 4.13) comporte un premier commutateur de puissance (T111, TT112, T113) relié à une borne de polarité positive du dispositif de stockage d'énergie (4.3) et un second commutateur de puissance (T211, T212, T213) relié à une borne de polarité négative du dispositif de stockage d'énergie (4.3), dans lequel, pendant la commande pleine onde, un courant ne circule que dans les modules de commutation dont le premier commutateur de puissance est à l'état passant.

3. Dispositif de conversion de puissance multiniveaux modulaire selon la revendication 1 ou 2, dans lequel les moyens de commande (29) sont adaptés pour commander les commutateurs électroniques de puissance de modules d'une même chaîne de modules successivement durant la commande MLI.

4. Dispositif de conversion de puissance multiniveaux modulaire selon l'une des revendications 1 à 3, dans lequel chaque commutateur électronique de puissance (T111) est associé avec une diode (D111) en antiparallèle.

5. Dispositif de conversion de puissance multiniveaux modulaire • selon l'une des revendications 1 à 4, dans lequel chaque commutateur électronique de puissance (T111, T211) est choisi parmi un transistor bipolaire à grille isolée, un transistor à effet de champ, un transistor MOSFET, un thyristor à extinction par la gâchette, un thyristor commuté par la gâchette intégré.

6. Dispositif de conversion de puissance multiniveaux modulaire selon l'une des revendications 1 à 5, dans lequel le dispositif de stockage d'énergie (4.3) est choisi parmi un condensateur, une batterie, une pile à combustible.

7. Dispositif de conversion de puissance multiniveaux modulaire selon l'une des revendications 1 à 6, dans lequel la connexion des chaînes de modules d'un même bras à la borne commune (3.1, 3.2, 3.3) se fait via des inductances (L11, L12, L21, L22, L31, L32).

8. Dispositif de conversion de puissance multiniveaux modulaire selon l'une des revendications 1 à 4, dans lequel le convertisseur à sortie continue et entrée continue (20) est un convertisseur DC/DC multiniveaux modulaire possédant un unique bras (20.1) dont les extrémités définissent deux bornes d'entrée continues, comportant deux demi-bras (25) en série ayant une borne commune (A), cette borne commune (A) définissant une des bornes continue de sortie, une des extrémités définissant l'autre borne de sortie (22), chaque demi-bras comportant une chaîne de modules (26) de commutation avec au moins une paire de commutateurs électroniques de puissance montés en série, cette paire étant montée aux bornes d'un dispositif de stockage d'énergie, et des moyens de commande (30) des commutateurs électroniques de puissance de chaque module.

9. Dispositif de conversion de puissance multiniveaux modulaire selon la revendication 8, dans lequel les moyens de commande (30) des commutateurs électroniques de puissance de chaque module (26) du convertisseur DC/DC multiniveaux modulaire (20) sont adaptés pour appliquer aux commutateurs électroniques de puissance une commande pleine onde, la commande pleine onde ayant une fréquence plus grande que la fréquence de la commande pleine onde des moyens de commande (29) des commutateurs électroniques de puissance de chaque module (411, 4.12, 4.13) du convertisseur DC/AC multiniveaux modulaire (21).

10. Dispositif de conversion de puissance multiniveaux modulaire selon l'une des revendications 1 à 7, dans lequel le convertisseur à sortie continue et entrée alternative (90) est un pont redresseur à commutation commandée.

11. Dispositif de conversion de puissance multiniveaux modulaire selon l'une des revendications 1 à 7, dans lequel le convertisseur à sortie continue et entrée alternative (90) est un convertisseur AC/DC multiniveaux modulaire.

12. Variateur de vitesse comportant un dispositif de conversion de puissance multiniveaux modulaire selon l'une des revendications 1 à 11.

13. Variateur de vitesse selon la revendication 12, dans lequel le dispositif de conversion de puissance multiniveaux modulaire comporte un convertisseur à sortie continue et entrée alternative (90), l'entrée alternative (A1, A2, A3) est destinée à être reliée à une alimentation électrique alternative (80).

14. Variateur de vitesse selon la revendication 12, dans lequel le dispositif de conversion de puissance multiniveaux modulaire comporte un convertisseur à entrée continue et sortie continue (20), le variateur de vitesse comporte, en outre, un convertisseur à entrée alternative et sortie continue (81), destiné à être relié côté entrée alternative à une alimentation électrique alternative (80) et relié côté sortie continue au convertisseur à entrée continue et sortie continue (20).

15. Variateur de vitesse selon la revendication 14, comportant en outre un transformateur (84) destiné à être relié d'un côté à l'alimentation électrique alternative (80) et relié de l'autre à l'entrée alternative du convertisseur à entrée alternative et sortie continue (90) du dispositif de conversion de puissance multiniveaux modulaire.

## Patentansprüche

1. Modulare Mehrstufen-Leistungsumwandlungsvorrichtung mit Wechselstromausgang und mit Wechselstrom- oder Gleichstromeingang, die aufweist:
einen modularen DC/AC- Mehrstufenwandler (21) mit mehreren parallelgeschalteten Zweigen (1.1, 1.2, 1.3), deren Enden Gleichstrom-Eingangsklemmen (27, 28) definieren, wobei jeder Zweig zwei Ketten von in Reihe geschalteten Schaltmodulen (4.11, 4.12, 4.13, 4.14, 4.15, 4.16) aufweist, die mit einer gemeinsamen Klemme (3.1, 3.2, 3.3) verbunden sind, wobei diese gemeinsame Klemme eine Wechselstrom-Ausgangsklemme der modularen Mehrstufen-Leistungsumwandlungsvorrichtung definiert, wobei jedes Schaltmodul (4.11, 4.12, 4.13, 4.14, 4.15, 4.16) mindestens ein Paar von in Reihe angeordneten elektronischen Leistungsschaltern (T111, T211) aufweist, das an die Klemmen einer Energiespeichervorrichtung (4.3) montiert ist, wobei die elektronischen Leistungsschalter (T111, T112, T113) einer gleichen Kette, die mit einer Klemme gleicher Polarität der Energiespeichervorrichtung (4.3) verbunden sind, als homolog angesehen werden, wobei der modulare DC/AC-Mehrstufenwandler (21) dazu bestimmt ist, die Frequenz am Ausgang der modularen Mehrstufen-Umwandlungsvorrichtung anzupassen und außerdem Steuereinrichtungen (29) der elektronischen Leistungsschalter aufweist, um sie in einen leitenden Zustand oder einen gesperrten Zustand zu bringen, **dadurch gekennzeichnet, dass**
die Steuereinrichtungen (29) geeignet sind, während mindestens eines Teils eines Betriebszeitfensters der Leistungsumwandlungsvorrichtung eine Vollwellensteuerung an die elektronischen Leistungsschalter anzuwenden, wobei die Module (4.11, 4.12, 4.13) einer gleichen Kette dann homologe elektronische Leistungsschalter (T111, T112, T113) gleichzeitig in einem gleichen Zustand haben,
die Steuereinrichtungen (29) geeignet sind, während mindestens eines anderen verbleibenden Teils des Zeitfensters eine PWM-Steuerung an die elektronischen Leistungsschalter (T111, T211, T112, T212, T113, T213) anzuwenden, wobei die PWM-Steuerung angewendet wird, wenn ein Ausgangsstrom der modularen Mehrstufen-Leistungsumwandlungsvorrichtung niedriger als eine Schwelle ist, und die Vollwellensteuerung anzuwenden, wenn der Ausgangsstrom höher als die oder gleich der Schwelle ist,
und dass sie außerdem einen Wandler mit Gleichspannungsausgang und Gleichspannungs- oder Wechselspannungseingang (20) aufweist, der zwei Ausgangsklemmen (A, 22) aufweist, die mit den Eingangsgleichspannungsklemmen (27, 28) des modularen Mehrstufenwandlers (21) verbunden sind, wobei dieser Wandler mit Gleichspannungsausgang dazu bestimmt ist, die Amplitude am Ausgang der Leistungsumwandlungsvorrichtung zu regeln.

2. Modulare Mehrstufen-Leistungsumwandlungsvorrichtung nach Anspruch 1, wobei jedes Modul (4.11, 4.12, 4.13) einen ersten Leistungsschalter (T111, TT112, T113), der mit einer Klemme mit positiver Polarität der Energiespeichervorrichtung (4.3) verbunden ist, und einen zweiten Leistungsschalter (T211, T212, T213) aufweist, der mit einer Klemme mit negativer Polarität der Energiespeichervorrichtung (4.3) verbunden ist, wobei während der Vollwellensteuerung ein Strom nur in den Schaltmodulen zirkuliert, deren erster Leistungsschalter leitend ist.

3. Modulare Mehrstufen-Leistungsumwandlungsvorrichtung nach Anspruch 1 oder 2, wobei die Steuereinrichtungen (29) geeignet sind, die elektronischen Leistungsschalter von Modulen einer gleichen Kette von Modulen nacheinander während der PWL-Steuerung zu steuern.

4. Modulare Mehrstufen-Leistungsumwandlungsvorrichtung nach einem der Ansprüche 1 bis 3, wobei jeder elektronische Leistungsschalter (T111) einer Diode (D111) antiparallel zugeordnet ist.

5. Modulare Mehrstufen-Leistungsumwandlungsvorrichtung nach einem der Ansprüche 1 bis 4, wobei jeder elektronische Leistungsschalter (T111, T211) ausgewählt wird unter einem Bipolartransistor mit isoliertem Gate, einem Feldeffekttransistor, einem MOSFET-Transistor, einem GTO-Thyristor, einem IGCT-Thyristor.

6. Modulare Mehrstufen-Leistungsumwandlungsvorrichtung nach einem der Ansprüche 1 bis 5, wobei die Energiespeichervorrichtung (4.3) ausgewählt wird unter einem Kondensator, einer Batterie, einer Brennstoffzelle.

7. Modulare Mehrstufen-Leistungsumwandlungsvorrichtung nach einem der Ansprüche 1 bis 6, wobei der Anschluss der Ketten von Modulen eines gleichen Zweigs an die gemeinsame Klemme (3.1, 3.2, 3.3) mittels Drosselspulen (L11, L12, L21, L22, L31, L32) erfolgt.

8. Modulare Mehrstufen-Leistungsumwandlungsvorrichtung nach einem der Ansprüche 1 bis 4, wobei der Wandler mit Gleichspannungsausgang und Gleichspannungseingang (20) ein modularer DC/DC-Mehrstufenwandler ist, der einen einzigen Zweig (20.1) besitzt, dessen Enden zwei Gleichspannungseingangsklemmen definieren, der zwei in Reihe geschaltete Halbzweige (25) aufweist, die eine gemeinsame Klemme (A) haben, wobei diese gemeinsame Klemme (A) eine der Gleichspannungsausgangsklemmen definiert, wobei eines der Enden die andere Ausgangsklemme (22) definiert, wobei jeder Halbzweig eine Kette von Schaltmodulen (26) mit mindestens einem Paar von in Reihe geschalteten elektronischen Leistungsschaltern, wobei dieses Paar an die Klemmen einer Energiespeichervorrichtung montiert ist, und Steuereinrichtungen (30) der elektronischen Leistungsschalter jedes Moduls aufweist.

9. Modulare Mehrstufen-Leistungsumwandlungsvorrichtung nach Anspruch 8, wobei die Steuereinrichtungen (30) der elektronischen Leistungsschalter jedes Moduls (26) des modularen DC/DC-Mehrstufenwandlers (20) geeignet sind, an die elektronischen Leistungsschalter eine Vollwellensteuerung anzuwenden, wobei die Vollwellensteuerung eine höhere Frequenz als die Frequenz der Vollwellensteuerung der Steuereinrichtungen (29) der elektronischen Leistungsschalter jedes Moduls (4.11, 4.12, 4.13) des modularen DC/AC-Mehrstufenwandlers (21) hat.

10. Modulare Mehrstufen-Leistungsumwandlungsvorrichtung nach einem der Ansprüche 1 bis 7, wobei der Wandler mit Gleichstromausgang und Wechselstromeingang (90) eine Gleichrichterbrücke mit gesteuerter Umschaltung ist.

11. Modulare Mehrstufen-Leistungsumwandlungsvorrichtung nach einem der Ansprüche 1 bis 7, wobei der Wandler mit Gleichstromausgang und Wechselstromeingang (90) ein modularer AC/DC-Mehrstufenwandler ist.

12. Drehzahlregler, der eine modulare Mehrstufen-Leistungsumwandlungsvorrichtung nach einem der Ansprüche 1 bis 11 aufweist.

13. Drehzahlregler nach Anspruch 12, wobei die modulare Mehrstufen-Leistungsumwandlungsvorrichtung einen Wandler mit Gleichstromausgang und Wechselstromeingang (90) aufweist, wobei der Wechselstromeingang (A1, A2, A3) dazu bestimmt ist, mit einer Wechselstromversorgung (80) verbunden zu werden.

14. Drehzahlregler nach Anspruch 12, wobei die modulare Mehrstufen-Leistungsumwandlungsvorrichtung einen Wandler mit Gleichstromeingang und Gleichstromausgang (20) aufweist, wobei der Drehzahlregler außerdem einen Wandler mit Wechselstromeingang und Gleichstromausgang (81) aufweist, der dazu bestimmt ist, auf der Wechselstromeingangsseite mit einer Wechselstromversorgung (80) und auf der Gleichstromausgangsseite mit dem Wandler mit Gleichstromeingang und Gleichstromausgang (20) verbunden zu sein.

15. Drehzahlregler nach Anspruch 14, der außerdem einen Transformator (84) aufweist, der dazu bestimmt ist, einerseits mit der Wechselstromversorgung (80) und andererseits mit dem Wechselstromeingang des Wandlers mit Wechselstromeingang und Gleichstromausgang (90) der modularen Mehrstufen-Leistungsumwandlungsvorrichtung verbunden zu werden.

## Claims

1. A modular multilevel power conversion device with AC output and AC or DC input comprising:
a modular multilevel DC/AC converter (21) having several arms (1.1, 1.2, 1.3) mounted in parallel whose ends define DC input terminals (27, 28), each arm comprising two chains of switching modules (4.11, 4.12, 4.13, 4.14, 4.15, 4.16) in series, linked to a common terminal (3.1, 3.2, 3.3), this common terminal defining an AC output terminal of the modular multilevel power conversion device, each switching module (4.11, 4.12, 4.13, 4.14, 4.15, 4.16) comprising at least one pair of electronic power switches (T111, T211) arranged in series, mounted on the terminals of an energy storage device (4.3), the electronic power switches (T111, T112, T113) of one and the same chain, which are linked to a terminal of like polarity of the energy storage device (4.3) being termed homologues, the modular multilevel DC/AC converter (21) being designed to adjust the output frequency of the modular multilevel conversion device and furthermore comprising control means (29) for the electronic power switches so as to place them in an on or off state, **characterized in that**
the control means (29) are adapted to apply full-wave control to the electronic power switches during at least one part of a time interval of operation of the power conversion device, the switching modules (4.11, 4.12, 4.13) of one and the same chain then having homologous electronic power switches (T111, T112, T113) in one and the same state simultaneously,
the control means (29) are adapted to apply, during at least one other remaining part of the time interval, a PWM control to the electronic power switches (T111, T211, T112, T212, T113, T213), the PWM control being applied when an output current of the modular multilevel power conversion device is less than a threshold and the full-wave control being applied when the output current is greater than or equal to the threshold,
and **in that** it furthermore comprises
a converter with DC output and DC or AC input (20) comprising two output terminals (A, 22) linked to the DC input terminals (27,28) of the modular multilevel converter (21), said converter with DC output being designed to adjust the output amplitude of the power conversion device.

2. The modular multilevel power conversion device as claimed in claim 1, in which each switching module (4.11,4.12, 4.13) comprises a first power switch (T111, TT112, T113) linked to a terminal of positive polarity of the energy storage device (4.3) and a second power switch (T211, T212, T213) linked to a terminal of negative polarity of the energy storage device (4.3), wherein, during the full-wave control, a current flows only in the switching modules whose first power switch is in the on state.

3. The modular multilevel power conversion device as claimed in claim 1 or 2, in which the control means (29) are adapted to successively control the electronic power switches of modules of one and the same chain of modules during the PWM control.

4. The modular multilevel power conversion device as claimed in one of claims 1 to 3, in which each electronic power switch (T111) is associated with a diode (D111) in antiparallel.

5. The modular multilevel power conversion device as claimed in one of claims 1 to 4, in which each electronic power switch (T111, T211) is chosen from among an insulated-gate bipolar transistor, a field-effect transistor, a MOSFET transistor, a gate turn-off thyristor, an integrated gate-commutated thyristor.

6. The modular multilevel power conversion device as claimed in one of claims 1 to 5, in which the energy storage device (4.3) is chosen from among a capacitor, a battery, a fuel cell.

7. The modular multilevel power conversion device as claimed in one of claims 1 to 6, in which the connection of the chains of modules of one and the same arm to the common terminal (3.1, 3.2, 3.3) is effected via inductors (L11, L12, L21, L22, L31, L32).

8. The modular multilevel power conversion device as claimed in one of claims 1 to 4, in which the converter with DC output and DC input (20) is a modular multilevel DC/DC converter possessing a single arm (20.1) whose ends define two DC input terminals, comprising two half-arms (25) in series having a common terminal (A), this common terminal (A) defining one of the DC output terminals, one of the ends defining the other output terminal (22), each half-arm comprising a chain of switching modules (26) with at least one pair of electronic power switches mounted in series, this pair being mounted across the terminals of an energy storage device, and control means (30) for the electronic power switches of each module.

9. The modular multilevel power conversion device as claimed in claim 8, in which the control means (30) for the electronic power switches of each module (26) of the modular multilevel DC/DC converter (20) are adapted to apply full-wave control to the electronic power switches, the full-wave control having a larger frequency than the frequency of the full-wave control of the control means (29) for the electronic power switches of each module (4.11, 4.12, 4.13) of the modular multilevel DC/AC converter (21).

10. The modular multilevel power conversion device as claimed in one of claims 1 to 7, in which the converter with DC output and AC input (90) is a controlled-switching rectifier bridge.

11. The modular multilevel power conversion device as claimed in one of claims 1 to 7, in which the converter with DC output and AC input (90) is a modular multilevel AC/DC converter.

12. A variable speed drive comprising a modular multilevel power conversion device as claimed in one of claims 1 to 11.

13. The variable speed drive as claimed in claim 12, in which the modular multilevel power conversion device comprises a converter with DC output and AC input (90), the AC input (A1, A2, A3) being designed to be linked to an AC electrical power supply (80).

14. The variable speed drive as claimed in claim 12, in which the modular multilevel power conversion device comprises a converter with DC input and DC output (20), the variable speed drive comprises, furthermore, a converter with AC input and DC output (81), designed to be linked on AC input side to an AC electrical power supply (80) and linked on DC output side to the converter with DC input and DC output (20).

15. The variable speed drive as claimed in claim 14, furthermore comprising a transformer (84) designed to be linked on one side to the AC electrical power supply (80) and linked on the other side to the AC input of the converter with AC input and DC output (90) of the modular multilevel power conversion device.
